# EUROPEAN PATENT APPLICATION

(11) **EP 4 654 641 A1**
(43) Date of publication of application: **26.11.2025**
(21) Application number: 24752912.6
(22) Date of filing: 07.02.2024
(51) Int. Cl.: H04W 12/069, H04W 12/60, H04W 76/19

(54) **COMMUNICATION METHOD AND APPARATUS**

(30) Priority: 12.02.2023 CN 202310136707
(71) Applicant: Huawei Technologies Co., Ltd., Shenzhen, Guangdong 518129 (CN)
(72) Inventor: LIU, Wenfeng, Shenzhen, Guangdong 518129 (CN); LI, He, Shenzhen, Guangdong 518129 (CN); WU, Rong, Shenzhen, Guangdong 518129 (CN); GUO, Yanfei, Shenzhen, Guangdong 518129 (CN)
(74) Representative: Epping - Hermann - Fischer
(86) International application number: PCT/CN2024/076820
(87) International publication number: WO 2024/165058

(57) **Abstract**

This application provides a communication method and apparatus, which may be applied to a communication system, so that when a communication apparatus UE initiates a TNAP switch, a UE forged by an attacker can be identified, to prevent the UE forged by the attacker from accessing a target TNAP, so as to improve communication security. The method includes: In a procedure in which a UE accesses a trusted non-3rd generation partnership project gateway function TNGF via a source trusted non-3rd generation partnership project 3GPP access point TNAP, the UE obtains a UE authentication identity, and generates a TNGF key. The TNGF key is a shared key between the TNGF and the UE. When the UE switches from the source TNAP to a target TNAP, the UE sends a first message to the TNGF via the target TNAP. The first message includes the UE authentication identity and a first verification parameter. The first verification parameter is generated by the UE based on the UE authentication identity and the TNGF key.

## Description

This application claims priority to Chinese Patent Application No. 202310136707.4, filed with the China National Intellectual Property Administration on February 12, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In a process in which a UE switches from a source trusted non-3rd generation partnership project 3GPP access point (trusted non-3GPP access point, TNAP) to a target TNAP, a trusted non-3GPP gateway function (trusted non-3GPP gateway function, TNGF) may identify an identity of the UE based on a user equipment (user equipment, UE) authentication identity, so that the UE switches from the source TNAP to the target TNAP. Before the UE switches from the source TNAP to the target TNAP, no security connection is established between the TNGF and the target TNAP. Consequently, the UE authentication identity cannot be securely protected during transmission of the UE authentication identity between the UE and the target TNAP. In this case, an attacker may forge the UE to initiate a TNAP switch procedure, to cause a communication security problem.

### SUMMARY

Embodiments of this application provide a communication method and apparatus, to prevent an attacker from forging a UE to initiate a TNAP switch, to improving communication security.

To achieve the foregoing objective, the following technical solutions are used in this application.

According to a first aspect, a communication method is provided. The communication method includes: In a procedure in which a user equipment UE accesses a trusted non-3rd generation partnership project gateway function TNGF via a source trusted non-3rd generation partnership project 3GPP access point TNAP, the UE obtains a UE authentication identity, and generates a TNGF key. The TNGF key is a shared key between the TNGF and the UE. When the UE switches from the source TNAP to a target TNAP, the UE sends a first message to the TNGF via the target TNAP. The first message includes the UE authentication identity and a first verification parameter. The first verification parameter is generated by the UE based on the UE authentication identity and the TNGF key.

According to the communication method provided in the first aspect, when the UE switches from the source TNAP to the target TNAP, the UE may send the first verification parameter when sending the UE authentication identity to the target TNAP. The first verification parameter is generated based on the TNGF key and the UE authentication identity. In this way, the TNGF can perform integrity authentication on the UE authentication identity and perform identity authentication on the UE, based on the received UE authentication identity and first verification parameter, so that when an attacker forges the UE to initiate a TNAP switch, the UE forged by the attacker can be identified. This prevents the UE forged by the attacker from accessing the target TNAP, to improve communication security.

In a possible design solution, that the UE obtains the UE authentication identity may include: The UE receives the UE authentication identity from the TNGF via the source TNAP.

In a possible design solution, before the UE obtains the UE authentication identity, the method provided in the first aspect may further include: The UE accesses the TNGF via the source TNAP.

In a possible design solution, the first message is an identity response message, and before the UE sends the first message to the TNGF via the target TNAP, the method provided in the first aspect may further include: The UE determines to switch from the source TNAP to the target TNAP. The UE establishes a layer 2 connection to the target TNAP. The UE receives an identity request message from the target TNAP. The identity request message is used to trigger the UE to send the first message.

In a possible design solution, the method provided in the first aspect may further include: The UE receives a notification request message from the TNGF via the source TNAP. The notification request message includes a nonce TNonce of the TNGF and a second verification parameter. The second verification parameter is generated by the TNGF based on the TNGF key and the TNonce. The UE generates a third verification parameter based on the TNGF key and the TNonce. That the UE obtains the UE authentication identity may include: When the second verification parameter matches the third verification parameter, the UE generates the UE authentication identity based on the TNGF key, the TNonce, and a nonce UNonce of the UE. The UNonce is generated by the UE.

Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the TNGF key and the UNonce.

In a possible design solution, the method provided in the first aspect may further include: The UE receives a notification request message from the TNGF via the source TNAP. The notification request message includes a nonce TNonce of the TNGF and a second verification parameter. The second verification parameter is generated by the TNGF based on an intermediate key and the TNonce. The intermediate key is generated by the TNGF based on the TNGF key. The UE generates the intermediate key based on the TNGF key. The UE generates a third verification parameter based on the intermediate key and the TNonce. That the UE obtains the UE authentication identity may include: When the second verification parameter matches the third verification parameter, the UE generates the UE authentication identity based on the intermediate key, the TNonce, and a nonce UNonce of the UE. The UNonce is generated by the UE.

Optionally, the method provided in the first aspect further includes: When the second verification parameter matches the third verification parameter, the UE sends a notification response message to the TNGF via the source TNAP. The notification response message includes a fourth verification parameter and the UNonce. The fourth verification parameter is generated based on the intermediate key and the UNonce.

In a possible design solution, the method provided in the first aspect may further include: The UE receives a notification request message from the TNGF via the source TNAP. The notification request message includes a nonce TNonce of the TNGF, an address of the TNGF, and a second verification parameter. The second verification parameter is generated by the TNGF based on the TNGF key, the TNonce, and the address of the TNGF. The UE generates a third verification parameter based on the TNGF key, the TNonce, and the address of the TNGF. That the UE obtains the UE authentication identity includes: When the second verification parameter matches the third verification parameter, the UE generates the UE authentication identity based on the TNGF key, the TNonce, and a nonce UNonce of the UE.

Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the TNGF key and the UNonce.

In a possible design solution, the method provided in the first aspect may further include: The UE receives a notification request message from the TNGF via the source TNAP. The notification request message includes a nonce TNonce of the TNGF, an address of the TNGF, and a second verification parameter. The second verification parameter is generated by the TNGF based on an intermediate key, the nonce TNonce of the TNGF, and the address of the TNGF. The intermediate key is generated by the TNGF based on the TNGF key. The UE generates the intermediate key based on the TNGF key. The UE generates a third verification parameter based on the intermediate key, the TNonce, and the address of the TNGF. That the UE obtains the UE authentication identity includes: When the second verification parameter matches the third verification parameter, the UE generates the UE authentication identity based on the intermediate key, the TNonce, a nonce UNonce of the UE, and the address of the TNGF. The UNonce is generated by the UE.

Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the intermediate key and the UNonce.

In a possible design solution, the method provided in the first aspect may further include: The UE receives a notification request message from the TNGF via the source TNAP. The notification request message includes a nonce TNonce of the TNGF, an identifier of the TNGF, and a second verification parameter. The second verification parameter is generated by the TNGF based on the TNGF key, the TNonce, and the identifier of the TNGF. The UE generates a third verification parameter based on the TNGF key, the TNonce, and the identifier of the TNGF. That the UE obtains the UE authentication identity may include: When the second verification parameter matches the third verification parameter, the UE generates the UE authentication identity based on the TNGF key and at least the TNonce and a nonce UNonce of the UE. The UNonce is generated by the UE.

Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the TNGF key and the UNonce.

In a possible design solution, the method provided in the first aspect may further include: The UE receives a notification request message from the TNGF via the source TNAP. The notification request message includes a nonce TNonce of the TNGF, an identifier of the TNGF, and a second verification parameter. The second verification parameter is generated by the TNGF based on an intermediate key, the TNonce, and the identifier of the TNGF. The intermediate key is generated by the TNGF based on the TNGF key. The UE generates the intermediate key based on the TNGF key. The UE generates a third verification parameter based on the intermediate key, the TNonce, and the identifier of the TNGF. That the UE obtains the UE authentication identity may include: When the second verification parameter matches the third verification parameter, the UE generates the UE authentication identity based on the intermediate key and at least the TNonce and a nonce UNonce of the UE. The UNonce is generated by the UE. Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the intermediate key and the UNonce.

In a possible design solution, the method provided in the first aspect may further include: The UE receives a notification request message from the TNGF via the source TNAP. The notification request message includes a nonce TNonce of the TNGF, an address of the TNGF, an identifier of the TNGF, and a second verification parameter. The second verification parameter is generated by the TNGF based on the TNGF key, the TNonce, the address of the TNGF, and the identifier of the TNGF. The UE generates a third verification parameter based on the TNGF key, the TNonce, the address of the TNGF, and the identifier of the TNGF. That the UE obtains the UE authentication identity may include: When the second verification parameter matches the third verification parameter, the UE generates the UE authentication identity based on the TNGF key and at least the TNonce and a nonce UNonce of the UE. The UNonce is generated by the UE.

Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the TNGF key and the UNonce.

In a possible design solution, the method provided in the first aspect may further include: The UE receives a notification request message from the TNGF via the source TNAP. The notification request message includes a TNonce, an address of the TNGF, an identifier of the TNGF, and a second verification parameter. The second verification parameter is generated by the TNGF based on an intermediate key, the TNonce, the address of the TNGF, and the identifier of the TNGF. The intermediate key is generated by the TNGF based on the TNGF key. The UE generates the intermediate key based on the TNGF key. The UE generates a third verification parameter based on the intermediate key, the TNonce, the address of the TNGF, and the identifier of the TNGF. That the UE obtains the UE authentication identity includes: When the second verification parameter matches the third verification parameter, the UE generates the UE authentication identity based on the intermediate key and at least the TNonce and a nonce UNonce of the UE. The UNonce is generated by the UE.

Optionally, the method provided in the first aspect may further include: When the second verification parameter matches the third verification parameter, the UE sends a notification response message to the TNGF via the source TNAP. The notification response message includes a fourth verification parameter and the UNonce. The fourth verification parameter is generated based on the intermediate key and the UNonce.

Optionally, before the UE obtains the UE authentication identity, the method provided in the first aspect may further include: The UE generates the UNonce.

In a possible design solution, before the UE sends the first message to the TNGF via the target TNAP, the method provided in the first aspect may further include: The UE generates the first verification parameter based on the TNGF key and the UE authentication identity.

Optionally, that the UE generates the first verification parameter based on the TNGF key and the UE authentication identity may include: The UE calculates a first message authentication code based on the TNGF key, the UE authentication identity, and a preconfigured function, to obtain the first verification parameter.

Alternatively, optionally, that the UE generates the first verification parameter based on the TNGF key and the UE authentication identity may include: The UE generates the intermediate key based on the TNGF key. The UE calculates a first message authentication code based on the intermediate key, the UE authentication identity, and a preconfigured function, to obtain the first verification parameter.

In a possible design solution, the TNGF key is generated based on a long-term key.

According to a second aspect, a communication method is provided. The communication method includes: In a procedure in which a user equipment UE accesses a trusted non-3rd generation partnership project gateway function TNGF via a source trusted non-3rd generation partnership project 3GPP access point TNAP, the TNGF obtains a UE authentication identity, and obtains a TNGF key. The TNGF key is a shared key between the TNGF and the UE. The TNGF receives a first message from the UE via a target TNAP. The first message includes the UE authentication identity and a first verification parameter. The first verification parameter is generated by the TNGF based on the UE authentication identity and the TNGF key. When the first verification parameter is successfully checked, the TNGF generates a target key based on the TNGF key. The target key is used to secure communication between the UE and the target TNAP.

According to the communication method provided in the second aspect, when the UE switches from the source TNAP to the target TNAP, the TNGF may receive the first message. The first message includes the UE authentication identity and the first verification parameter. The first verification parameter is generated based on the TNGF key and at least the UE authentication identity. In this way, the TNGF can perform integrity authentication on the UE authentication identity and perform identity authentication on the UE, based on the received UE authentication identity and first verification parameter, so that when an attacker forges the UE to initiate a TNAP switch, the UE forged by the attacker can be identified. This prevents the UE forged by the attacker from accessing the target TNAP, to improve communication security.

In a possible design solution, that the TNGF obtains the UE authentication identity may include: The TNGF generates the UE authentication identity.

Optionally, the method provided in the second aspect may further include: The TNGF sends the UE authentication identity to the UE via the source TNAP.

In a possible design solution, the method provided in the second aspect may further include: The TNGF sends a notification request message to the UE via the source TNAP. The notification request message includes a nonce TNonce of the TNGF and a second verification parameter. The second verification parameter is generated by the TNGF based on the TNGF key and the TNonce. The TNGF receives a notification response message from the UE via the source TNAP. The notification response message includes a fourth verification parameter and a nonce UNonce of the UE. The fourth verification parameter is generated by the UE based on the TNGF key and the UNonce. The TNGF generates a fifth verification parameter based on the TNGF key and the UNonce.

That the TNGF obtains the UE authentication identity may include: When the fourth verification parameter matches the fifth verification parameter, the TNGF generates the UE authentication identity based on the TNGF key, the TNonce, and the UNonce.

In a possible design solution, the method provided in the second aspect may further include: The TNGF generates an intermediate key based on the TNGF key. The TNGF sends a notification request message to the UE via the source TNAP. The notification request message includes a nonce TNonce of the TNGF and a second verification parameter. The second verification parameter is generated by the TNGF based on the intermediate key and the TNonce. The TNGF receives a notification response message from the UE via the source TNAP. The notification response message includes a fourth verification parameter and a nonce UNonce of the UE. The fourth verification parameter is generated by the UE based on the intermediate key and the UNonce. The TNGF generates a fifth verification parameter based on the intermediate key and the UNonce. That the TNGF obtains the UE authentication identity may include: When the fourth verification parameter matches the fifth verification parameter, the TNGF generates the UE authentication identity based on the intermediate key, the TNonce, and the UNonce.

In a possible design solution, the method provided in the second aspect may further include: The TNGF sends a notification request message to the UE via the source TNAP. The notification request message includes a nonce TNonce of the TNGF, an address of the TNGF, and a second verification parameter. The second verification parameter is generated by the TNGF based on the TNGF key, the TNonce, and the address of the TNGF. The TNGF receives a notification response message from the UE via the source TNAP. The notification response message includes a fourth verification parameter and a nonce UNonce of the UE. The fourth verification parameter is generated by the UE based on the TNGF key and the UNonce. The TNGF generates a fifth verification parameter based on the TNGF key and the UNonce. That the TNGF obtains the UE authentication identity may include: When the fourth verification parameter matches the fifth verification parameter, the TNGF generates the UE authentication identity based on the TNGF key and at least the TNonce and the UNonce.

In a possible design solution, the method provided in the second aspect may further include: The TNGF generates an intermediate key based on the TNGF key. The TNGF sends a notification request message to the UE via the source TNAP. The notification request message includes a nonce TNonce of the TNGF, an address of the TNGF, and a second verification parameter. The second verification parameter is generated by the TNGF based on the intermediate key, the TNonce, and the address of the TNGF. The TNGF receives a notification response message from the UE via the source TNAP. The notification response message includes a fourth verification parameter and a nonce UNonce of the UE. The fourth verification parameter is generated by the UE based on the intermediate key and the UNonce. The TNGF generates a fifth verification parameter based on the intermediate key and the UNonce. That the TNGF obtains the UE authentication identity may include: When the fourth verification parameter matches the fifth verification parameter, the TNGF generates the UE authentication identity based on the intermediate key and at least the TNonce and the UNonce.

In a possible design solution, the method provided in the second aspect may further include: The TNGF sends a notification request message to the UE via the source TNAP. The notification request message includes a nonce TNonce of the TNGF, an identifier of the TNGF, and a second verification parameter. The second verification parameter is generated by the TNGF based on the TNGF key, the TNonce, and the identifier of the TNGF. The TNGF receives a notification response message from the UE via the source TNAP. The notification response message includes a fourth verification parameter and a nonce UNonce of the UE. The fourth verification parameter is generated by the UE based on the TNGF key and the UNonce. The TNGF generates a fifth verification parameter based on the TNGF key and the UNonce. That the TNGF obtains the UE authentication identity may include: When the fourth verification parameter matches the fifth verification parameter, the TNGF generates the UE authentication identity based on the TNGF key and at least the TNonce and the UNonce.

In a possible design solution, the method provided in the second aspect may further include: The TNGF generates an intermediate key based on the TNGF key. The TNGF sends a notification request message to the UE via the source TNAP. The notification request message includes a TNonce, an identifier of the TNGF, and a second verification parameter. The second verification parameter is generated by the TNGF based on the intermediate key, the TNonce, and the identifier of the TNGF. The TNGF receives a notification response message from the UE via the source TNAP. The notification response message includes a fourth verification parameter and a nonce UNonce of the UE. The fourth verification parameter is generated by the UE based on the intermediate key and the UNonce. The TNGF generates a fifth verification parameter based on the intermediate key and the UNonce. That the TNGF obtains the UE authentication identity may include: When the fourth verification parameter matches the fifth verification parameter, the TNGF generates the UE authentication identity based on the intermediate key and at least the TNonce and the UNonce.

In a possible design solution, the method provided in the second aspect may further include: The TNGF sends a notification request message to the UE via the source TNAP. The notification request message includes a nonce TNonce of the TNGF, an address of the TNGF, an identifier of the TNGF, and a second verification parameter. The second verification parameter is generated by the TNGF based on the TNGF key, the TNonce, the address of the TNGF, and the identifier of the TNGF. The TNGF receives a notification response message from the UE via the source TNAP. The notification response message includes a fourth verification parameter and a nonce UNonce of the UE. The fourth verification parameter is generated by the UE based on the TNGF key and the UNonce. The TNGF generates a fifth verification parameter based on the TNGF key and the UNonce. That the TNGF obtains the UE authentication identity may include: When the fourth verification parameter matches the fifth verification parameter, the TNGF generates the UE authentication identity based on the TNGF key and at least the TNonce and the UNonce.

In a possible design solution, the method provided in the second aspect may further include: The TNGF generates an intermediate key based on the TNGF key. The TNGF sends a notification request message to the UE via the source TNAP. The notification request message includes a nonce TNonce of the TNGF, an address of the TNGF, an identifier of the TNGF, and a second verification parameter. The second verification parameter is generated by the TNGF based on the intermediate key, the TNonce, the address of the TNGF, and the identifier of the TNGF. The TNGF receives a notification response message from the UE via the source TNAP. The notification response message includes a fourth verification parameter and a nonce UNonce of the UE. The fourth verification parameter is generated by the UE based on the intermediate key and the UNonce. The TNGF generates a fifth verification parameter based on the intermediate key and the UNonce. That the TNGF obtains the UE authentication identity may include: When the fourth verification parameter matches the fifth verification parameter, the TNGF generates the UE authentication identity based on the intermediate key and at least the TNonce and the UNonce.

In a possible design solution, before the TNGF generates the target key based on the TNGF key, the method provided in the second aspect may further include: The TNGF generates a sixth verification parameter based on the UE authentication identity and the TNGF key. That the TNGF generates the target key based on the TNGF key includes: When the first verification parameter matches the sixth verification parameter, the TNGF generates the target key based on the TNGF key.

In a possible design solution, the TNGF key is generated by an AMF based on a long-term key.

According to a third aspect, a communication method is provided. The communication method is applied to a procedure in which a user equipment UE accesses a trusted non-3rd generation partnership project gateway function TNGF for the first time. The communication method includes: The UE receives a notification request message from the TNGF via a source trusted non-3rd generation partnership project 3GPP access point TNAP. The notification request message includes a second verification parameter and at least a nonce TNonce of the TNGF. The second verification parameter is generated based on a TNGF key and at least the TNonce. The TNGF key is a shared key between the UE and the TNGF. The UE generates a third verification parameter based on the TNGF key and at least the TNonce. When the second verification parameter matches the third verification parameter, the UE sends a notification response message to the TNGF via the source TNAP. The notification response message includes a nonce UNonce of the UE and a fourth verification parameter. The fourth verification parameter is generated by the UE based on the UNonce and the TNGF key.

According to the communication method provided in the third aspect, the UE may receive the second verification parameter and at least the TNonce from the TNGF. The second verification parameter is generated based on the TNGF key and at least the TNonce. The UE generates the third verification parameter based on the TNGF key and at least the TNonce. In this way, the second verification parameter may be checked, to implement integrity protection of at least the TNonce. The UE sends the UNonce and the fourth verification parameter to the TNGF when the second verification parameter matches the third verification parameter. In this way, the TNGF may check the third verification parameter, to implement integrity protection of the UNonce. In conclusion, integrity protection between the TNGF and the UE can be implemented, to improve communication security.

In a possible design solution, that the UE generates the third verification parameter based on the TNGF key and at least the TNonce includes: The UE generates an intermediate key based on the TNGF key. The UE generates the third verification parameter based on the intermediate key and the TNonce.

In a possible design solution, the notification request message further includes an address of the TNGF. The second verification parameter is generated by the TNGF based on the TNGF key, the TNonce, and the address of the TNGF. That the UE generates the third verification parameter based on the TNGF key and at least the TNonce includes: The UE generates the third verification parameter based on the TNGF key, the TNonce, and the address of the TNGF.

In a possible design solution, the notification request message further includes an address of the TNGF. The second verification parameter is generated by the TNGF based on an intermediate key, the TNonce, and the address of the TNGF. The intermediate key is generated by the TNGF based on the TNGF key. That the UE generates the third verification parameter based on the TNGF key and at least the TNonce includes: The UE generates the third verification parameter based on the intermediate key, the TNonce, and the address of the TNGF.

In a possible design solution, the notification request message further includes an identifier of the TNGF. The second verification parameter is generated by the TNGF based on the TNGF key, the TNonce, and the identifier of the TNGF. That the UE generates the third verification parameter based on the TNGF key and at least the TNonce includes: The UE generates the third verification parameter based on the TNGF key, the TNonce, and the identifier of the TNGF.

In a possible design solution, the notification request message further includes an identifier of the TNGF. The second verification parameter is generated by the TNGF based on an intermediate key, the TNonce, and the identifier of the TNGF. The intermediate key is generated by the TNGF based on the TNGF key. That the UE generates the third verification parameter based on the TNGF key and at least the TNonce includes: The UE generates the intermediate key based on the TNGF key. The UE generates the third verification parameter based on the intermediate key, the TNonce, and the identifier of the TNGF.

In a possible design solution, the notification request message further includes an address of the TNGF and an identifier of the TNGF. The second verification parameter is generated by the TNGF based on the TNGF key, the TNonce, the address of the TNGF, and the identifier of the TNGF. That the UE generates the third verification parameter based on the TNGF key and at least the TNonce includes: The UE generates the third verification parameter based on the TNGF key, the TNonce, the address of the TNGF, and the identifier of the TNGF.

In a possible design solution, the notification request message further includes an address of the TNGF and an identifier of the TNGF. The second verification parameter is generated by the TNGF based on an intermediate key, the TNonce, the address of the TNGF, and the identifier of the TNGF. The intermediate key is generated by the TNGF based on the TNGF key. That the UE generates the third verification parameter based on the TNGF key and at least the TNonce includes: The UE generates the intermediate key based on the TNGF key. The UE generates the third verification parameter based on the intermediate key, the TNonce, the address of the TNGF, and the identifier of the TNGF.

In a possible design solution, the method provided in the third aspect further includes: The UE generates a UE authentication identity based on the TNGF key and at least the TNonce and the UNonce.

According to a fourth aspect, a communication method is provided. The communication method includes: When a trusted non-3rd generation partnership project gateway function TNGF receives an initial context setup request from an access and mobility management network element AMF, the TNGF sends a notification request message to a user equipment UE via a first trusted non-3rd generation partnership project 3GPP access point TNAP. The notification request message includes a nonce TNonce of the TNGF and a second verification parameter. The second verification parameter is generated based on the TNonce and a TNGF key. The TNGF key is a shared key between the UE and the TNGF. The TNGF generates a fifth verification parameter based on the TNGF key and a UNonce. The TNGF receives a notification response message from the UE. The notification response message includes the nonce UNonce of the UE and a fourth verification parameter. The fourth verification parameter is generated based on the UNonce and a root key for the TNGF. When the fourth verification parameter matches the fifth verification parameter, the TNGF sends a source key to a source TNAP. The source key is used to secure communication between the source TNAP and the UE.

According to the communication method provided in the fourth aspect, the TNGF sends the second verification parameter and at least the TNonce to the UE. The second verification parameter is generated based on the TNGF key and at least the TNonce, so that the UE can check the second verification parameter, to implement integrity protection of at least the TNonce. The TNGF receives the UNonce and the fourth verification parameter from the UE and the TNGF, generates the fifth verification parameter based on the TNGF key and the UNonce, and sends the source key to the TNAP when the fourth verification parameter matches the fifth verification parameter. In this way, integrity protection of the UNonce can be implemented. In conclusion, integrity protection between the TNGF and the UE can be implemented, to improve communication security.

For example, the source key is generated based on the TNGF key.

In a possible design solution, that the TNGF generates the fifth verification parameter based on the TNGF key and the UNonce includes: The TNGF generates an intermediate key based on the TNGF key. The TNGF generates the fifth verification parameter based on the intermediate key and the UNonce.

In a possible design solution, the method provided in the fourth aspect may further include: The TNGF generates a UE authentication identity based on the TNonce, the UNonce, and the TNGF key.

According to a fifth aspect, a communication apparatus is provided. The communication apparatus is configured to perform the communication method according to any one of the implementations of the first aspect to the fourth aspect. In this application, the communication apparatus according to the fifth aspect may be the communication apparatus according to the first aspect or the third aspect, the TNGF according to the second aspect or the fourth aspect, a chip (system) or another part or component that may be disposed in the communication apparatus or the TNGF, or an apparatus including the communication apparatus or the TNGF.

It should be understood that the communication apparatus according to the fifth aspect includes a corresponding module, unit, or means (means) for implementing the communication method according to any one of the first aspect to the fourth aspect. The module, the unit, or the means may be implemented by hardware, may be implemented by software, or may be implemented by hardware executing corresponding software. The hardware or the software includes one or more modules or units configured to perform functions related to the foregoing communication methods.

In addition, for technical effects of the communication apparatus in the fifth aspect, refer to the technical effects of the communication method in any one of the first aspect to the fourth aspect. Details are not described herein again. According to a sixth aspect, a communication apparatus is provided. The communication apparatus includes a processor, and the processor is configured to perform the communication method according to any one of the possible implementations of the first aspect to the fourth aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be separately disposed. The memory may be configured to store a computer program and/or data related to the communication method according to any one of the first aspect to the fourth aspect.

In this application, the communication apparatus according to the sixth aspect may be the communication apparatus according to the first aspect or the third aspect, the TNGF according to the second aspect or the fourth aspect, a chip (system) or another part or component that may be disposed in the communication apparatus or the TNGF, or an apparatus including the communication apparatus or the TNGF.

According to a seventh aspect, a communication apparatus is provided. The communication apparatus includes a processor. The processor is coupled to a memory, and the processor is configured to execute a computer program stored in the memory, so that the communication apparatus performs the communication method according to any one of the possible implementations of the first aspect to the fourth aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the communication apparatus according to the first aspect or the third aspect, the TNGF according to the second aspect or the fourth aspect, a chip (system) or another part or component that may be disposed in the communication apparatus or the TNGF, or an apparatus including the communication apparatus or the TNGF.

According to an eighth aspect, a communication apparatus is provided, including a processor and a memory. The memory is configured to store a computer program, and when the processor executes the computer program, the communication apparatus is enabled to perform the communication method according to any one of the implementations of the first aspect to the fourth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be the communication apparatus according to the first aspect or the third aspect, the TNGF according to the second aspect or the fourth aspect, a chip (system) or another part or component that may be disposed in the communication apparatus or the TNGF, or an apparatus including the communication apparatus or the TNGF.

According to a ninth aspect, a communication apparatus is provided, including a processor. The processor is configured to: be coupled to a memory; and after reading a computer program in the memory, perform, based on the computer program, the communication method according to any one of the implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the eighth aspect may be the communication apparatus according to the first aspect or the third aspect, the TNGF according to the second aspect or the fourth aspect, a chip (system) or another part or component that may be disposed in the communication apparatus or the TNGF, or an apparatus including the communication apparatus or the TNGF.

According to a tenth aspect, a processor is provided. The processor is configured to perform the communication method according to any one of the possible implementations of the first aspect to the fourth aspect.

According to an eleventh aspect, a communication system is provided. The communication system includes one or more terminal devices and one or more network devices.

According to a twelfth aspect, a computer-readable storage medium is provided, including a computer program or instructions. When the computer program or the instructions are run on a computer, the computer is enabled to perform the communication method according to any one of the possible implementations of the first aspect to the fourth aspect. According to a thirteenth aspect, a computer program product is provided, including a computer program or instructions. When the computer program or the instructions are run on a computer, the computer is enabled to perform the communication method according to any one of the possible implementations of the first aspect to the fourth aspect. In addition, for technical effects of the communication apparatus in the fifth aspect to the thirteenth aspect, refer to the technical effects of the communication method in the first aspect to the fourth aspect. Details are not described herein again.

### BRIEF DESCRIPTION OF DRAWINGS

FIG. 1 is a diagram of an architecture of a core network according to an embodiment of this application;
FIG. 2 is a diagram of a trusted non-3GPP registration, authentication, and PDU session establishment procedure;
FIG. 3 is a schematic flowchart 1 of a TNAP switch;
FIG. 4 is a schematic flowchart 2 of a TNAP switch;
FIG. 5 is a diagram of an architecture of a communication system according to an embodiment of this application;
FIG. 6 is a schematic flowchart 1 of a communication method according to an embodiment of this application;
FIG. 7 is a schematic flowchart 2 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

For ease of understanding, technical terms in embodiments of this application are described first below.
1. 5th generation (5th generation, 5G) mobile communication system (5G system (5G system, 5GS) for short):

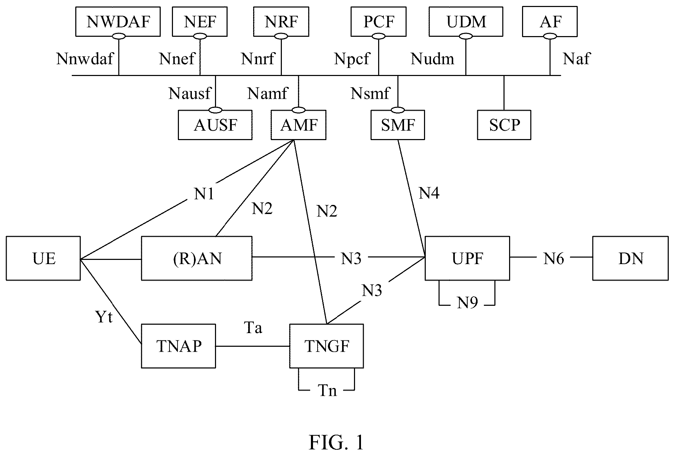

   FIG. 1 is a diagram of an architecture of the 5GS. As shown in FIG. 1, the 5GS includes an access network (access network, AN) and a core network (core network, CN), and may further include a user equipment (user equipment, UE).

The CN may include a user plane function (user plane function, UPF) network element (user plane network element for short), an access and mobility management function (core access and mobility management function, AMF) network element, a session management function (session management function, SMF) network element (session management network element for short), an authentication server function (authentication server function, AUSF) network element, a trusted non-3GPP access point (trusted non-3GPP access point, TNAP), a trusted non-3GPP gateway function (trusted non-3GPP gateway function, TNGF) network element, a network data analytics function (network data analytics function, NWDAF) network element (network data analytics network element for short), a network exposure function (network exposure function, NEF) network element, a network function repository function (network exposure function repository function, NRF) network element, a policy control function (policy control function, PCF) network element (policy control network element for short), a unified data management (unified data management, UDM) network element (data management network element for short), an application function (application function, AF) network element, a service communication proxy (service communication proxy, SCP) network element, or the like.

It should be noted that FIG. 1 provides merely some examples of network elements or entities in a 5G network. The 5G network may further include some network elements or entities that are not shown in FIG. 1, for example, a unified data repository (unified data repository, UDR) network element, a network slice selection function (network slice selection function, NSSF) network element, and a charging function (charging function, CHF) network element. This is not specifically limited in embodiments of this application.

As shown in FIG. 1, the user equipment accesses the 5G network via the AN device, and the user equipment communicates with the AMF network element through an N1 interface (N1 for short). The RAN device communicates with the AMF network element through an N2 interface (N2 for short). The user equipment communicates with the TNAP through a Yt interface, and the TNAP communicates with the TNGF network element through a Ta interface. The TNGF network element communicates with the AMF network element through an N2 interface. The TNGF network element further communicates with the UPF network element through an N3 interface. The RAN device communicates with the UPF network element through an N3 interface (N3 for short). The SMF network element communicates with the UPF network element through an N4 interface (N4 for short), and the UPF network element accesses a data network (data network, DN) through an N6 interface (N6 for short). In addition, control plane functions such as the AUSF network element, the AMF network element, the SMF network element, the NEF network element, the NRF network element, the PCF network element, the UDM network element, the UDR network element, the AF network element, the NWDAF network element, or the SCP network element shown in FIG. 1 interact with each other through a service-based interface. For example, a service-based interface exhibited by the AUSF network element is Nausf, a service-based interface exhibited by the AMF network element is Namf, a service-based interface exhibited by the SMF network element is Nsmf, a service-based interface exhibited by the NEF network element is Nnef, a service-based interface exhibited by the NRF network element is Nnrf, a service-based interface exhibited by the PCF network element is Npcf, a service-based interface exhibited by the UDM network element is Nudm, and a service-based interface exhibited by the AF network element is Naf. In addition, a service-based interface exhibited by the UDR network element is Nudr, a service-based interface exhibited by the NSSF network element is Nnssf, and a service-based interface exhibited by the CHF network element is Nchf. For related function descriptions and interface descriptions, refer to a diagram of a 5G system architecture (5G system architecture) in the 23.501 standard. Details are not described herein.

The following separately describes functions of each part or network element in the network architecture in the 5G network by using examples.
(1) A terminal may be a terminal having a transceiver function, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.
(2) An AN network element is configured to implement an access-related function, may provide a network access function for an authorized terminal in a specific area, and can use transmission tunnels of different quality based on a level of the terminal, a service requirement, and the like. The AN forwards a control signal and user data between a network element terminal and the CN. The AN network element in this application may be a radio access network (radio access network, RAN) network element. The RAN network element can manage a radio resource, and provide an access service for the user equipment, to forward a control signal and terminal data between the terminal and the core network. The RAN network element may also be understood as a base station in a conventional network. For example, the RAN network element may be responsible for functions such as radio resource management, quality of service (quality of service, QoS) management, and data compression and encryption on an air interface side.

The RAN network element may be a device in a wireless network. The RAN network element may also be referred to as a wireless RAN network element, a network device, or a wireless network node. Currently, some examples of the RAN network element are: a next generation NodeB (next generation NodeB, gNB) in the 5G system, a transmission reception point (transmission reception point, TRP), an evolved NodeB (evolved NodeB, eNB) in a long term evolution (long term evolution, LTE) system, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. In a network structure, the network device may include a central unit (central unit, CU) node, a distributed unit (distributed unit, DU) node, or a RAN network element including the CU node and the DU node. The RAN network element may alternatively be a wireless backhaul device, a vehicle-mounted device, a wearable device, a network device in a future 5G network, a network device in a future evolved PLMN, or the like. In a 3rd generation (3rd generation, 3G) system, the RAN network element is referred to as a NodeB (NodeB) or the like.

(3) The mobility management network element is a core network element, and is mainly responsible for signaling processing, for example, functions such as access control, mobility management, attachment and detachment, and gateway selection. When serving a session of the terminal, the mobility management network element provides control plane storage resources for the session, to store a session identifier, an SMF network element identifier associated with the session identifier, and the like. In the 5G communication system, the mobility management network element may be an access and mobility management function (access and mobility management function, AMF) network element. In the future communication system, the mobility management network element may still be an AMF network element, or may have another name. This is not limited in this application.

(4) The session management network element is configured to perform session management in a mobile network, for example, responsible for user plane network element selection, user plane network element redirection, internet protocol (internet protocol, IP) address allocation, setup, modification, and release of a bearer, QoS control, session management, IP address allocation and management of the terminal, selection and control of a user plane function, termination of interfaces toward policy control and charging functions, downlink data notification, and the like. In the 5G communication system, the session management network element may be an SMF network element. In the future communication system, the session management network element may still be an SMF network element, or may have another name. This is not limited in this application.

(5) The user plane network element is used for packet routing and forwarding, quality of service (quality of service, QoS) handling for user plane data, or the like. In the 5G communication system, a network element or an entity corresponding to the user plane network element may be a user plane function (user plane function, UPF) network element in the 5G network architecture. In the future communication system, the user plane network element may still be a UPF network element, or the user plane network element has another name. This is not limited in embodiments of this application.

(6) The authentication server function network element mainly provides an authentication function, and supports authentication for 3rd generation partnership project (3rd generation partnership project, 3GPP) access and non-3GPP access. For details, refer to 3GPP TS 33.501. In the 5G communication system, the authentication server function network element may be an authentication server function (authentication server function, AUSF) network element. In the future communication system, the authentication server function network element may still be an AUSF network element, or the authentication server function network element has another name. This is not limited in embodiments of this application.

(7) The TNAP is configured to provide a UE access function.

(8) The TNGF network element serves as a gateway of a trusted non-3GPP access network.

(9) The data management network element is used for user identification handling, access authorization, registration, mobility management, or the like. In the 5G communication system, a network element or an entity corresponding to the data management network element may be a unified data management (unified data management, UDM) network element in the 5G network architecture. Nudm is a service-based interface exhibited by the UDM network element, and the UDM network element may communicate with another network function through the Nudm. In the future communication system, the data management network element may still be a UDM network element, or the data management network element has another name. This is not limited in embodiments of this application.

(10) The network exposure function network element mainly provides a service, to enable a 3rd generation partnership project (3rd generation partnership project, 3GPP) network to securely provide a network service capability for a third-party service provider, namely, an application function network element 207. In the 5G communication system, the network exposure function network element may be a (network exposure function, NEF) network element. Nnef is a service-based interface exhibited by the NEF network element, and the NEF network element may communicate with another network function through the Nnef. In the future communication system, the network exposure function network element may still be a NEF network element, or has another name. This is not limited in embodiments of this application.

(11) The policy control network element includes a user subscription data management function, a policy control function, a charging policy control function, QoS control, and the like, is a unified policy framework to govern network behavior, and provides policy rule information to a control plane function network element (for example, the AMF network element). In the 5G communication system, the policy control network element may be a PCF network element. In the future communication system, the policy control function network element may still be a PCF network element, or has another name. This is not limited in embodiments of this application.

(12) The application function network element is mainly configured to provide application layer information for a 3GPP network. In the 5G communication system, the application function network element 207 may be an application function (application function, AF) network element. Naf is a service-based interface exhibited by the AF network element, and the AF network element may communicate with another network function through the Naf. In the future communication system, the application function network element may still be an AF network element, or has another name. This is not limited in embodiments of this application. For example, the AF network element may include a services capability server (services capability server, SCS) or an application server (application server, AS).

(13) The data network refers to a network that provides a data transmission service for the terminal, for example, an IMS (IP Multi-media Service, IP multimedia service) and an internet.

The terminal accesses the data network by establishing a PDU session from the terminal to the DN network element via the RAN network element and the UPF network element.

(14) The network data analytics function network element is configured to provide a network data collection and analytics function based on technologies such as big data and artificial intelligence. In the 5G system, the network data analytics function network element may be an NWDAF network element. In the future communication system, the network data analytics function network element may still be an NWDAF network element, or may have another name. This is not limited in this application.

(15) The network slice selection function network element is configured to select a network slice for the terminal, and the like. In the 5G communication system, the slice selection function network element may be an NSSF network element. In the future communication system, the network slice selection function network element may still be an NSSF network element, or has another name. This is not limited in embodiments of this application.

(16) The unified data repository network element is mainly responsible for storage of structured data. Stored content includes subscription data and policy data, externally exposed structured data, and application-related data. In the 5G communication system, the unified data repository network element may be a UDR network element. In the future communication system, the unified data repository network element may still be a UDR network element, or may have another name. This is not limited in this application.

It should be noted that in the following embodiments, the TNGF network element is referred to as a TNGF for short, the AMF network element is referred to as an AMF for short, the AUSF network element is referred to as an AUSF for short, the UPF network element is referred to as a UPF for short, and the user equipment is referred to as a UE. Details are not described subsequently.

The UE may register for the core network via a 3rd generation partnership project (3rd generation partner project, 3GPP) access network or a trusted non-3GPP access network (trusted non-3GPP access network, TNAN), and complete authentication and protocol data unit (protocol, PDU) session establishment. The TNAN includes a TNAP and a TNGF.

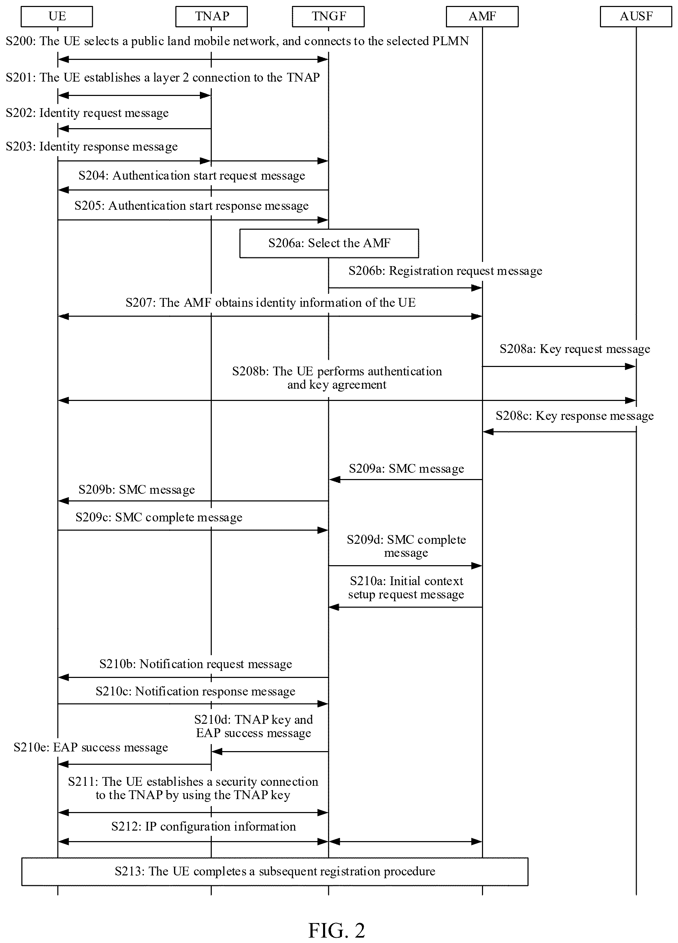

For ease of understanding, with reference to FIG. 2, the following describes a procedure in which a UE registers to a core network via a TNAN and completes authentication and PDU session establishment, which is referred to as a trusted non-3GPP registration, authentication, and PDU session establishment procedure for short below.

FIG. 2 is a diagram of the trusted non-3GPP registration, authentication, and PDU session establishment procedure. As shown in FIG. 2, the trusted non-3GPP registration, authentication, and PDU session establishment procedure includes S200 to S213.

S200: The UE selects a public land mobile network (public land mobile network, PLMN), and connects to the selected PLMN.

For example, the UE selects the PLMN and a TNAN by using a trusted non-3GPP (trusted non-3GPP) access network selection procedure defined in TS 23.501, to connect to the PLMN. It may be understood that the UE selects the PLMN with which the TNAN supports trusted connectivity.

For an implementation principle of S200, refer to related descriptions of step 0 in Section 7.2A.2.1 of TS 33.501 V17.7.0. Details are not described herein.

S201: The UE establishes a layer 2 (layer2, L2) connection (connection) to a TNAP.

For a specific implementation principle of S201, refer to related descriptions of step 1 in Section 7.2A.2.1 of TS 33.501 V17.7.0. Details are not described herein.

S202: The TNAP sends an identity request (EAP-Req/Identity) message to the UE. Correspondingly, the UE receives the identity request message from the TNAP.

The identity request message may be an extensible authentication protocol (extensible authentication protocol, EAP) identity request message.

For example, the EAP identity request message may be encapsulated into a data packet in an institute of electrical and electronics engineers (institute of electrical and electronics engineers, IEEE) 802.3/802.1x protocol format, a data packet in an IEEE 802.11/802.1x protocol format, or a data packet in a point-to-point protocol (point-to-point protocol, PPP) protocol format.

For a specific implementation principle of S202, refer to related descriptions of step 2 in Section 7.2A.2.1 of TS 33.501 V17.7.0. Details are not described herein.

S203: The UE sends an identity response message to a TNGF via the TNAP. Correspondingly, the TNGF receives the identity response message from the UE via the TNAP.

S203 may include the TNAP: The UE sends the identity response message to the TNAP. Correspondingly, the TNAP receives the identity response message from the UE. The identity response message sent by the UE to the TNAP includes identity information of the UE in a NAI (network access identifier) format. For example, the format of the identity information of the UE is "username@realm." The identity information of the UE in the NAI format is used to trigger the TNAP to send the identity response message to the TNGF.

After receiving the identity response information from the TNAP, the TNAP sends the identity response message to the TNGF. Correspondingly, the TNGF receives the identity response message from the TNAP. The identity response message sent by the UE to the TNAP may be encapsulated into an L2 message. The identity response message sent by the TNAP to the TNGF may be encapsulated into an AAA message.

It may be understood that the identity response message may be an EAP identity response message (EAP-Res/Identity). For a specific implementation principle of S203, refer to related descriptions of step 3 in Section 7.2A.2.1 of TS 33.501 V17.7.0. Details are not described herein.

S204: The TNGF sends an authentication start request message to the UE via the TNAP. Correspondingly, the UE receives the authentication start request message from the TNGF via the TNAP.

For example, the TNGF sends the authentication start request message to the TNAP. Correspondingly, the TNAP receives the authentication start request message from the TNGF. The TNAP sends the authentication start request message to the UE. Correspondingly, the UE receives the authentication start request message from the UE.

The authentication start request message is used to inform the UE to initiate a non-access stratum (non-access stratum, NAS) session, that is, to start sending a non-access stratum (non-access stratum, NAS) message encapsulated into a data packet, for example, an EAP-5G message.

The authentication start request message may be an authentication start request (EAP-Req/5G-Start) message.

For a specific implementation principle of S204, refer to related descriptions of step 4 in Section 7.2A.2.1 of TS 33.501 V17.7.0. Details are not described herein.

S205: The UE sends an authentication start response message to the TNGF via the TNAP. Correspondingly, the TNGF receives the authentication start response message from the UE via the TNAP.

For example, the UE sends the authentication start response message to the TNAP. Correspondingly, the TNAP receives the authentication start response message from the UE. After receiving the authentication start response message from the UE, the TNAP sends the authentication start response message to the TNGF. Correspondingly, the TNGF receives the authentication start response message from the TNAP. The authentication start response message may be an EAP-5G authentication start response (EAP-Res/5G-Start) message.

The authentication start response message includes an access network parameter (access network parameter, AN-Parameter) and a NAS-PDU parameter. The access network parameter includes single network slice selection assistance information (single network slice selection assistance information, S-NSSAI) and a 5G globally unique temporary identifier (5G globally unique temporary identifier, 5G-GUTI). The NAS-PDU parameter includes a registration request (Registration Request) message. In other words, the registration request message may be encapsulated by using a NAS protocol. The registration request message includes a UE security capability and a subscription concealed identifier (subscription concealed identifier, SUCI).

It may be understood that, in S205, if the UE is already with a 5GC over 3GPP access and there is an available security context, the UE integrity protects the registration request message, and includes the 5G-GUTI in the access network parameter (in other words, the 5G-GUTI in the access network parameter is replaced with the SUCI). If the UE has registered to a same AMF through 3GPP access and if this is the first time that the UE connects to the 5GC through non-3GPP access, a value of an uplink NAS counter (uplink NAS count, UL NAS COUNT) used for integrity protection is 0. Otherwise, the UE can use an existing non-3GPP specific UL NAS COUNT for integrity protection. It may be understood that the access network parameter is merely used as an example. During actual implementation, the access network parameter may further include another parameter. Details are not described herein.

For a specific implementation principle of S205, refer to related descriptions of step 5 in Section 7.2A.2.1 of TS 33.501 V17.7.0. Details are not described herein.

S206a: The TNGF selects an AMF.

For example, S206a may include: The TNGF selects the AMF as specified in Clause 6.5.3 of TS 23.501.

For a specific implementation principle of S206a, refer to related descriptions of step 6a in Section 7.2A.2.1 of TS 33.501 V17.7.0. Details are not described herein.

S206b: The TNGF sends the registration request message to the AMF. Correspondingly, the AMF receives the registration request message from the TNGF.

For a specific implementation principle of S206b, refer to related descriptions of step 6b in Section 7.2A.2.1 of TS 33.501 V17.7.0. Details are not described herein.

The registration request message may be carried in an N2 message (N2 message, N2 Msg).

S207: The AMF obtains the identity information of the UE.

For example, S207 may include: The AMF sends an identity request message to the TNGF through an N2 interface. After receiving the identity request message, the TNGF encapsulates the identity request message into a NAS request message, and sends the NAS request message to the TNAP. After receiving the NAS request message, the TNAP sends the NAS request message to the UE. After receiving the identity request message encapsulated into the NAS request message, the UE sends the identity response message encapsulated into a NAS response message to the TNAP. After receiving the NAS response message, the TNAP forwards the NAS response message to the TNGF. After receiving the NAS response message, the TNGF sends the identity request message to the AMF through the N2 interface. The NAS request message may be an EAP-5G NAS request message. The NAS response message may be an EAP-5G NAS response message.

For a specific implementation principle of S207, refer to related descriptions of step 7a and step 7b in Section 7.2A.2.1 of TS 33.501 V17.7.0. Details are not described herein.

S208a: The AMF sends a key request (Key Request) message to an AUSF. Correspondingly, the AUSF receives the key request message from the AMF.

The key request message includes a user permanent identifier (subscription permanent identifier, SUPI) and the user concealed identifier (subscription concealed identifier, SUCI). The key request message may be encapsulated into the AAA message.

For a specific implementation principle of S208a, refer to related descriptions of step 8a in Section 7.2A.2.1 of TS 33.501 V17.7.0. Details are not described herein.

S208b: The UE performs an authentication and key agreement (Authentication and Key Agreement, AKA) procedure.

The authentication and key agreement procedure may also be referred to as a primary authentication procedure. For implementation of the primary authentication procedure, refer to the primary authentication procedure defined in Section 6.1.3 of TS 33.501 17.7.0. The primary authentication procedure may be primary EAP-AKA' authentication. It may be understood that, for a specific implementation principle of S208b, also refer to related descriptions of step 8b in Section 7.2A.2.1 of TS 33.501 V17.7.0. Details are not described herein.

S208c: The AUSF sends a key response message to the AMF. Correspondingly, the AMF receives the key response message from the AUSF.

The key response message includes a security anchor function (security anchor function, SEAF) key (which may also be referred to as an anchor key) and an EAP success message.

For a specific implementation principle of S208c, refer to related descriptions of step 8c in Section 7.2A.2.1 of TS 33.501 V17.7.0. Details are not described herein.

S209a: The AMF sends a security mode command request (security mode command request, SMC Request) message to the TNGF. Correspondingly, the TNGF receives the SMC message from the AMF.

The SMC message is carried in the N2 message.

It may be understood that, when the EAP-AKA' authentication procedure is performed, the SMC message may carry the EAP success message. The EAP success message is received by the AMF from the AUSF.

For a specific implementation principle of S209a, refer to related descriptions of step 9a in Section 7.2A.2.1 of TS 33.501 V17.7.0. Details are not described herein.

S209b: The TNGF sends the SMC message to the UE via the TNAP. Correspondingly, the UE receives the SMC message from the TNGF via the TNAP.

The SMC message may be encapsulated into the EAP-5G NAS request message. The SMC message can carry an address (address) of the TNGF. In addition, when the EAP-AKA' authentication procedure is performed, the SMC message may carry the EAP success message.

For a specific implementation principle of S209b, refer to related descriptions of step 9b in Section 7.2A.2.1 of TS 33.501 V17.7.0. Details are not described herein.

S209c: The UE sends an SMC complete message to the TNGF via the TNAP. Correspondingly, the TNGF receives the SMC complete message from the UE via the TNAP.

For example, the UE sends the SMC complete message to the TNAP. The TNAP receives the SMC complete message from the UE. After receiving the SMC message from the UE, the TNAP sends the SMC complete message to the TNGF. Correspondingly, the TNGF receives the SMC complete message from the TNAP. The TNAP sends the SMC complete message to the TNGF.

The SMC complete message is encapsulated into the EAP-5G NAS response message.

For a specific implementation principle of S209c, refer to related descriptions of step 9c in Section 7.2A.2.1 of TS 33.501 V17.7.0. Details are not described herein.

S209d: After receiving the SMC complete message, the TNGF sends the SMC complete message to the AMF. Correspondingly, the AMF receives the SMC complete message from the TNGF.

For a specific implementation principle of S209d, refer to related descriptions of step 9d in Section 7.2A.2.1 of TS 33.501 V17.7.0. Details are not described herein.

S210a: The AMF sends an initial context setup request (Initial Ctx Setup Request) message to the TNGF. Correspondingly, the TNGF receives the initial context setup request message from the AMF.

The initial context setup request message may be encapsulated into an N2 message. The initial context setup request message may include a TNGF key.

The TNGF key may be used to derive a TNAP key, and the TNAP key is used to secure communication between the UE and the TNAP.

For a specific implementation principle of S210a, refer to related descriptions of step 10a in Section 7.2A.2.1 of TS 33.501 V17.7.0. Details are not described herein.

S210b: The TNGF sends a notification request message to the UE via the TNAP. Correspondingly, the UE receives the notification request message from the TNGF via the TNAP.

The notification request message includes the address of the TNGF, for example, an IP address.

For example, the notification request message may be an EAP-5G notification request (EAP-Req/5G-Notification) message.

For a specific implementation principle of S210b, refer to related descriptions of step 10b in Section 7.2A.2.1 of TS 33.501 V17.7.0. Details are not described herein.

S210c: The UE sends a notification response message to the TNGF via the TNAP. Correspondingly, the TNGF receives the notification response message from the UE via the TNAP.

For example, the notification response message may be an EAP-5G notification response (EAP-Res/5G-Notification) message.

For a specific implementation principle of S210c, refer to related descriptions of step 10c in Section 7.2A.2.1 of TS 33.501 V17.7.0. Details are not described herein.

S210d: The TNGF sends the TNAP key and the EAP success message to the TNAP. Correspondingly, the TNAP receives the TNAP key and the EAP success message from the TNGF. The TNAP key is used to secure communication between the TNAP and the TNGF.

For a specific implementation principle of S210d, refer to related descriptions of step 10d in Section 7.2A.2.1 of TS 33.501 V17.7.0. Details are not described herein.

S210e: The TNAP sends the EAP success message to the UE. Correspondingly, the UE receives the EAP success message from the TNAP.

For a specific implementation principle of S210e, refer to related descriptions of step 10e in Section 7.2A.2.1 of TS 33.501 V17.7.0. Details are not described herein.

S211: The UE establishes a security connection to the TNAP by using the TNAP key.

For example, the UE and the TNAP may use the TNAP key as a pairwise master key (pairwise master key, PMK), and perform a 4-way handshake based on the PMK to establish the security connection.

For an implementation principle of S211, refer to step 11 in Section 7.2A.1 of TS 33.501 V17.7.0.

S212: The UE receives IP configuration information from the TNGF.

The IP configuration information indicates an IP address used by the TNGF to communicate with the UE.

For an implementation principle of S212, refer to step 12 in Section 7.2A.1 of TS 33.501 V17.7.0.

S213: The UE completes a subsequent registration procedure.

For an implementation principle of S213, refer to step 13a to step 19 in Section 7.2A.1 of TS 33.501 V17.7.0.

S200 to S213 are the trusted non-3GPP registration, authentication, and PDU session establishment procedure. However, in an actual communication process, a relative location between the UE and the TNAP may change. For example, in a scenario in which the UE moves, a location of the UE changes, or signal quality of different TNAPs changes. As a result, a TNAP that provides a network service for the UE changes. In this case, the UE needs to switch the TNAP. In a scenario in which the UE switches between TNAPs, to simplify an interaction procedure, an identity of the UE may be identified by using a UE authentication identity, for example, a re-authentication identity (Re-authentication identity, Reauth ID). In this way, the TNGF may identify, based on the UE authentication identity, whether the UE is a UE that switches between TNAPs in the TNGF. In this way, when the UE switches from a source TNAP 1 in the TNGF to a target TNAP, a re-authentication procedure in a TNAP switch scenario may be performed, to establish a security connection between the UE and the target TNAP, so as to prevent the complete authentication procedure shown in FIG. 2 from being performed, and improve service continuity. The UE authentication identity may be allocated by the TNGF, or may be generated by using a nonce.

For ease of understanding, the following describes, with reference to the source TNAP and the target TNAP, switch procedures in which the UE authentication identity is obtained in different manners.

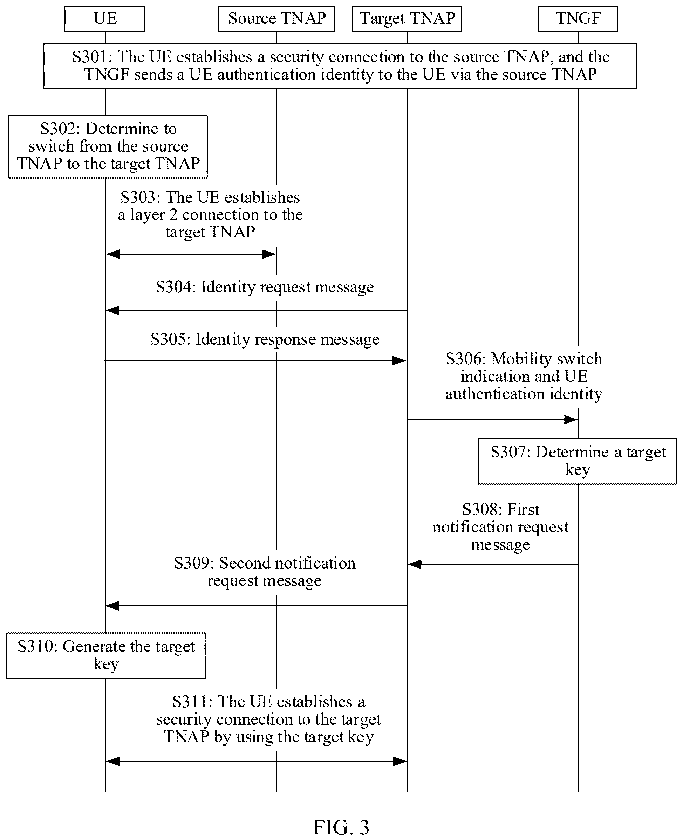

FIG. 3 is a schematic flowchart 1 of a TNAP switch. The method shown in FIG. 3 includes S301 to S311.

S301: A UE establishes a security connection to a source TNAP, and a TNGF sends a UE authentication identity to the UE via the source TNAP.

The UE authentication identity includes three parts: a public land mobile network (public land mobile network, PLMN) ID, a TNGF ID, and a temporary (temporary, Temp) ID.

In a procedure of S301, both the UE and the source TNAP may generate a source key, namely, a TNAP key for the source TNAP. The source key is used to secure communication between the UE and the source TNAP.

That the TNGF sends the UE authentication identity to the UE via the source TNAP may include: After the UE establishes the security connection to the source TNAP, the TNGF sends the UE authentication identity to the UE via the source TNAP.

For a specific implementation principle of establishing the security connection by the UE to the source TNAP in S301, refer to the procedure defined in 7A.2.1 of TS 33.501 V17.7.0, or refer to the related descriptions of S200 to S213. Details are not described herein again.

S302: The UE determines to switch from the source TNAP to a target TNAP.

For example, when the UE detects that signal strength of the source TNAP is less than or equal to a first signal strength threshold and signal strength of the target TNAP is greater than or equal to a second signal strength threshold, the UE determines to switch from the source TNAP to the target TNAP. It may be understood that the scenario in which the UE switches between the TNAPs herein is merely used as an example. During actual implementation, there may be another TNAP switch scenario. Details are not described herein.

S303: The UE establishes a layer 2 connection to the target TNAP.

For a specific implementation principle of S303, refer to the related descriptions of S201. Details are not described herein again.

S304: The target TNAP sends an identity request message to the UE. Correspondingly, the UE receives the identity request message from the target TNAP.

The identity request message is used by the target TNAP to obtain identity information of the UE.

The identity request message may be an EAP identity request message.

For implementation of the identity request message in S304, refer to the related descriptions of the identity request message in S202. Details are not described herein again.

For a specific implementation principle of S304, refer to the related descriptions of S202. Details are not described herein again.

S305: The UE sends an identity response message to the target TNAP. Correspondingly, the target TNAP receives the identity response message from the UE.

The identity response message includes a mobility switch indication (TNAP_Mobility_indication) and the UE authentication identity. The mobility switch indication indicates that the UE is still in a registration state, and needs to perform only an EAP-5G registration procedure without needing to send a registration request message to an AMF to trigger a primary authentication procedure.

S306: The target TNAP sends the mobility switch indication and the UE authentication identity to the TNGF.

The mobility switch indication and the UE authentication identity may be carried in an authentication, authorization, and accounting (authentication, authorization and accounting, AAA) message.

S307: The TNGF determines a target key.

For example, the TNGF identifies the UE based on the UE authentication identity and retrieves a context of the UE, to determine a TNGF key.

The context of the UE includes the TNGF key.

S308: The TNGF sends a first notification request message (EAP-Req/5G-notification) to the target TNAP. Correspondingly, the target TNAP receives the first notification request message from the TNGF.

The first EAP-5G notification request message includes one or more of the following: the target key, a first nonce, and a message authentication code (message authentication code, MAC) #0.

The message authentication code #0 is used to protect integrity of the nonce.

For example, the target key, the first nonce, and the message authentication code #0 may be carried in the AAA message. The first notification request message may be an EAP-5G notification request message.

S309: The target TNAP sends a second notification request message to the UE. Correspondingly, the UE receives the second notification request message from the target TNAP.

The second notification request message includes one or more of the following information: a start security mode (start security mode) message, the first nonce, and the message authentication code #0. The security mode start message indicates the UE to generate a target key by using the nonce and the TNGF key. The second notification request message may be an EAP-5G notification request message.

S310: The UE generates the target key.

For example, the UE checks the message authentication code #0. When the message authentication code #0 is successfully checked, the UE generates the target key based on the received first nonce.

The UE calculates a message authentication code #1 by using the TNGF key and the first nonce as inputs, and compares the message authentication code #1 with the message authentication code #0. If the message authentication code #1 matches the message authentication code #0, the message authentication code #0 is successfully checked. S311: The UE establishes a security connection to the target TNAP by using the target key.

The UE uses the target key as a PMK, and performs a 4-way handshake with the target TNAP, to establish the security connection between the UE and the target TNAP.

For an implementation principle of S311, refer to step 11 in Section 7.2A.1 of TS 33.501 V17.7.0 or the related descriptions of S211 in FIG. 2. Details are not described herein again.

In the procedure shown in FIG. 3, in a process in which the TNGF sends the UE authentication identity via the source TNAP, because the security connection has been established between the TNGF and the source TNAP, the UE authentication identity can be securely protected during transmission of the UE authentication identity between the source TNAP and the UE. However, in a process in which the UE switches from the source TNAP to the target TNAP, no security connection is established between the TNGF and the target TNAP. Consequently, the UE authentication identity cannot be securely protected during transmission of the UE authentication identity between the UE and the target TNAP. In this case, an attacker may forge the UE to initiate a TNAP switch procedure, to cause a communication security problem.

In addition, when the TNAP key is generated by using a value of a counter, each time the attacker initiates the switch procedure, a count value of the TNGF increases, but a count value of the UE that actually needs to access the TNAP does not change. In this case, the counter of the TNGF is inconsistent with that of the UE, and consequently, the UE cannot successfully access the TNAP.

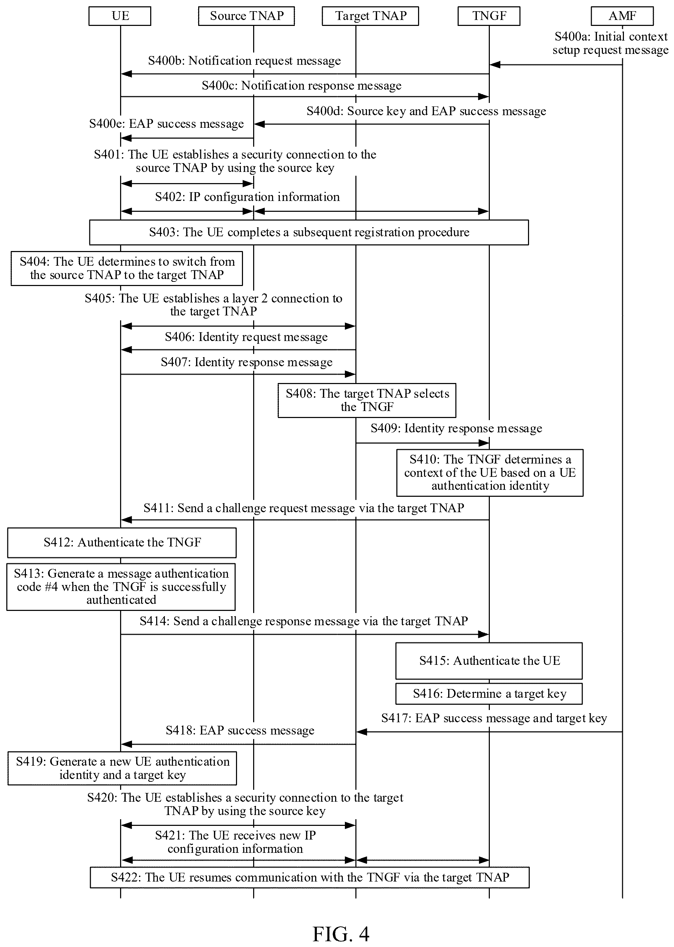

FIG. 4 is a schematic flowchart 2 of a TNAP switch. The method shown in FIG. 4 includes S400a to S422.

S400a: An AMF sends an initial context setup request message to a TNGF. Correspondingly, the TNGF receives the initial context setup request message from the AMF.

The initial context setup request message may be encapsulated into an N2 message. The initial context setup request message may include a TNGF key.

For a specific implementation principle of S400a, refer to related descriptions of step 10a in Section 7.2A.2.1 of TS 33.501 V17.7.0 or S210a. Details are not described herein.

It may be understood that before S400a, the method provided in FIG. 4 may further include S200 to S209d in FIG. 2. For a specific principle, refer to the related descriptions in FIG. 2. Details are not described herein again.

S400b: The TNGF sends a notification request message to a UE via a source TNAP. Correspondingly, the UE receives the notification request message from the TNGF via the source TNAP.

The notification request message includes an address of the TNGF, an identifier (TNGF identifier, TNGF-ID) of the TNGF, and a nonce (TNGF nonce, TNonce) of the TNGF. The notification request message may be an EAP-5G notification request message.

S400c: The UE sends a notification response message to the TNGF via the source TNAP. The TNGF receives the notification response message from the UE via the source TNAP.

The notification response message includes a nonce (UE nonce, UNonce) of the UE. For example, the notification response message may be an EAP-5G notification response message.

S400d: The TNGF sends a source key and an EAP success message to the source TNAP. Correspondingly, the source TNAP receives the source key and the EAP success message from the TNGF.

The source key is a TNAP key that is generated for the source TNAP based on the TNGF key, and the source key is used to secure communication between the source TNAP and the TNGF.

S400e: The source TNAP sends the EAP success message to the UE. Correspondingly, the UE receives the EAP success message from the source TNAP.

S401: The UE establishes a security connection to the source TNAP by using the source key.

For example, the UE and the source TNAP may use the source key as a PMK, and perform a 4-way handshake based on the PMK, to establish the security connection.

For an implementation principle of S401, refer to step 11 in Section 7.2A.1 of TS 33.501 V17.7.0 or S211.

S402: The UE receives IP configuration information from the TNGF.

The IP configuration information indicates an IP address used by the TNGF to communicate with the UE.

For an implementation principle of S402, refer to step 12 in Section 7.2A.1 of TS 33.501 V17.7.0 or S212. Details are not described herein again.

S403: The UE completes a subsequent registration procedure.

For an implementation principle of S403, refer to step 13a to step 19 in Section 7.2A.1 of TS 33.501 V17.7.0 or S213. Details are not described herein again.

S404: The UE determines to switch from the source TNAP to a target TNAP.

For a specific implementation principle of S404, refer to the related descriptions of S302. Details are not described herein again.

S405: The UE establishes a layer 2 connection to the target TNAP.

For an implementation principle of S405, refer to S201 or S303. Details are not described herein again.

S406: The target TNAP sends an identity request message to the UE. Correspondingly, the UE receives the identity request message from the target TNAP.

The identity request message may be an EAP identity request message (EAP-Req/Identity).

S407: The UE sends an identity response message to the target TNAP. Correspondingly, the target TNAP receives the identity response message from the UE.

The EAP identity response message includes identity information of the UE. A format of the identity information of the UE may be a network access identifier (network access identifier, NAI) format.

The identity information of the UE includes a user name and a domain name. The user name may be a UE authentication identity. The domain name may be "nai.5gc.tngf<tngf-ID>.mnc<mnc>.mcc<mcc>.3gppnetwork.org." S408: The target TNAP selects the TNGF.

For example, the target TNAP may select the TNGF based on the identity information of the UE. For example, the target TNAP may select the TNGF based on a <tngf-ID> field in the domain name of the identity information of the UE. That is, a TNGF indicated by the <tngf-ID> field in the domain name is the TNGF selected by the UE.

S409: The target TNAP sends the identity response message to the TNGF. Correspondingly, the TNGF receives the identity response message from the target TNAP.

The identity response message includes the UE authentication identity and the identity information of the UE in the NAI format.

S410: The TNGF determines a context of the UE based on the UE authentication identity in the identity response message.

S411: The TNGF sends a challenge request (EAP-Req/5G-challenge) message to the UE via the target TNAP. Correspondingly, the UE receives the challenge request message from the TNGF via the target TNAP.

The challenge request message may include the TNonce and a message authentication code #2. The message authentication code #2 is generated by the TNGF based on the TNGF key and the TNonce, and may be used to verify whether the TNonce is tampered with.

The challenge request message may be an EAP-5G challenge request message.

S412: The UE authenticates the TNGF.

S412 may also be described as that the UE checks the message authentication code #2.

For example, the UE generates a message authentication code #3 based on the TNGF key and the TNonce. If the message authentication code #3 matches the message authentication code #2, the TNGF is successfully authenticated. If the message authentication code #3 does not match the message authentication code #2, the TNGF fails to be authenticated.

S413: When the TNGF is successfully authenticated, the UE generates a message authentication code #4.

The message authentication code #4 is generated based on the TNGF key, the TNonce, and the UNonce, and may be used to protect integrity of the UNonce.

S414: The UE sends a challenge response (EAP-Res/5G-challenge) message to the TNGF via the target TNAP. Correspondingly, the TNGF receives the challenge response message from the UE via the target TNAP.

The challenge response message includes the TNonce, the UNonce, and the message authentication code #4.

For example, the challenge response message may be an EAP-5G challenge response message.

S415: The TNGF authenticates the UE.

In other words, the TNGF checks the message authentication code #4.

For example, the TNGF generates a message authentication code #5 based on the TNGF key, the TNonce, and the UNonce. If the message authentication code #5 matches the message authentication code #4, the UE is successfully authenticated. If the message authentication code #5 does not match the message authentication code #4, the UE fails to be authenticated.

S416: When the UE is successfully authenticated, the TNGF generates a target key.

When the UE is successfully authenticated, the TNGF generates a new UE authentication identity of the UE based on the TNGF-ID, the TNonce, the UNonce, and the TNGF key, and generates the target key based on the TNGF-ID, the TNonce, the UNonce, and the TNGF key.

It may be understood that the new UE authentication identity may be used to identify an identity of the UE when the UE switches from the target TNAP to a TNAP connected to the TNGF other than the target TNAP, or used to identify whether the UE accesses the TNGF for the first time.

S417: The TNGF sends an EAP success message and the target key to the target TNAP. Correspondingly, the target TNAP receives the EAP success message and the target key from the TNGF.

S418: The target TNAP sends the EAP success message to the UE. Correspondingly, the UE receives the EAP success message from the target TNAP.

S419: The UE generates a new UE authentication identity and a target key.

The UE generates the new UE authentication identity by using a TNGF key, a TNGF-ID, a TNonce, and a UNonce that are stored in the UE, and generates the target key based on the TNGF-ID, the TNonce, the UNonce, and the TNGF key.

If the UE and the TNGF share a same TNGF key, the UE and the TNGF independently derive the same new UE authentication identity and the same target key.

S420: The UE establishes a security connection to the target TNAP by using the source key.

For an implementation principle of S420, refer to S211. Details are not described herein again.

S421: The UE receives new IP configuration information.

For an implementation principle of S421, refer to S212. Details are not described herein again.

S422: The UE resumes communication with the TNGF via the target TNAP.

In the solution shown in FIG. 4, a transmission procedure of a parameter used to generate the UE authentication identity is received when the UE is connected to the TNGF for the first time, for example, when the UE performs initial registration via the TNGF, that is, before the UE establishes the security connection to the source TNAP. In this case, there is no security protection in a transmission process of the parameter used to generate the UE authentication identity. Consequently, the parameter used to generate the UE authentication identity is changed by an attacker or is incorrectly transmitted. As a result, when the UE switches between TNAPs, whether a UE is the UE switch between the TNAPs cannot be correctly identified.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

All aspects, embodiments, or features are presented in this application by describing a system that may include a plurality of devices, components, modules, and the like. It should be understood and appreciated that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences between the terms are not emphasized. Terms "of (of)", "relevant (corresponding, relevant)", and "corresponding (corresponding)" may be interchangeably used sometimes. It should be noted that meanings expressed by the terms are consistent when differences between the terms are not emphasized.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

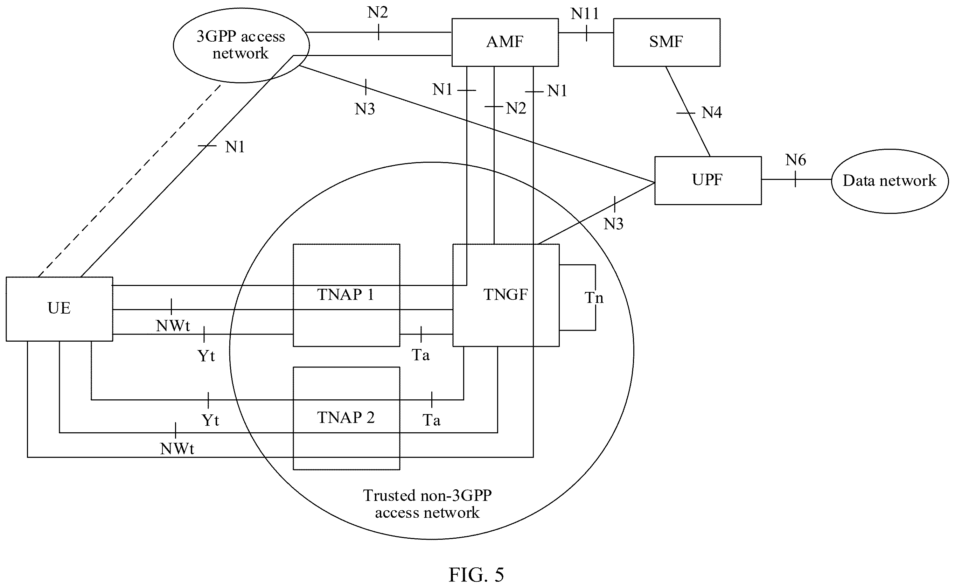

For ease of understanding of embodiments of this application, a communication system applicable to embodiments of this application is first described in detail by using a communication system shown in FIG. 5 as an example. For example, FIG. 5 is a diagram of an architecture of a communication system to which a communication method according to an embodiment of this application is applicable.

As shown in FIG. 5, the communication system includes a UE, a 3GPP access network, a trusted non-3GPP access network (trusted non-3GPP access network, TNAN), and an AMF.

The UE may perform 3GPP access via the 3GPP access network, and the UE may perform non-3GPP access via a TNAN. The TNAN includes a TNAP 1, a TNAP 2, and a TNGF. For example, the UE may be communicatively connected to the TNAP 1 through a Yt interface, and the UE may be communicatively connected to the TNGF through an NWt interface. The UE may further be communicatively connected to the AMF through an N1 interface. The UE may be communicatively connected to the TNAP 2 through a Yt interface, and the UE may be communicatively connected to the TNGF through an NWt interface. The UE may further be communicatively connected to the AMF through an N1 interface. In this case, the TNGF is a management network element of the TNAP 1 and the TNAP 2. That the TNGF is a management network element of a TNAP means that the TNGF establishes a connection to the TNAP, and the TNGF generates a key used to establish secure communication between the TNAP and the UE, and sends the key to the TNAP.

In addition, the communication system shown in FIG. 5 may further include an SMF, a UPF, and a data network.

The SMF may communicate with the AMF through an N11 interface, the UPF may be communicatively connected to the SMF through an N4 interface, the UPF may be communicatively connected to the TNGF through an N3 interface, and the data network may be communicatively connected to the UPF through an N6 interface. The 3GPP access network may be communicatively connected to the AMF through an N2 interface. The 3GPP access network may include a RAN.

It should be noted that the communication method provided in embodiments of this application may be applied between the UE, the TNAP 1, the TNAP 2, and the TNGF shown in FIG. 5. For specific implementation, refer to the following method embodiment. Details are not described herein.

It should be noted that the solutions in embodiments of this application may also be applied to another communication system, and a corresponding name may also be replaced with a name of a corresponding function in the another communication system.

It should be understood that FIG. 5 is merely a simplified diagram of an example for ease of understanding. The communication system may further include another network element such as an AMF and an AUSF, which is not shown in FIG. 5.

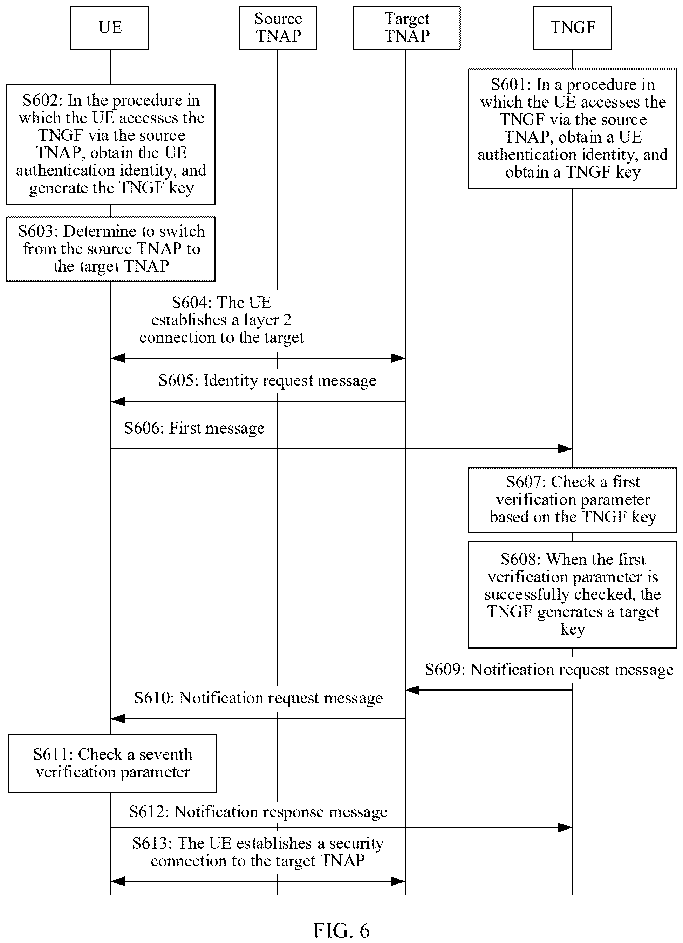

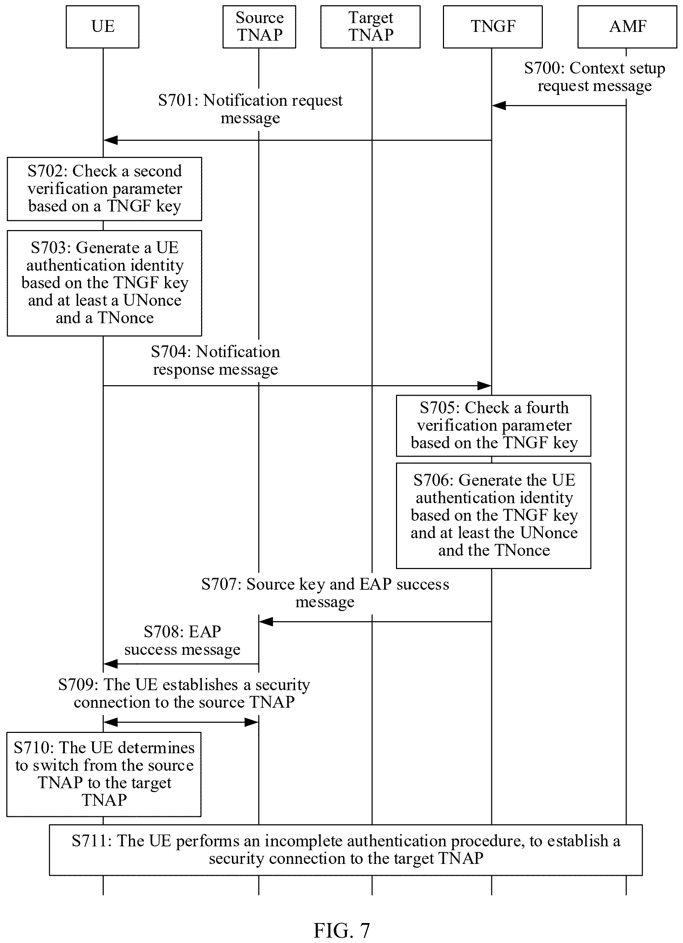

The following describes in detail the communication method provided in embodiments of this application with reference to FIG. 6 and FIG. 7.

In some possible embodiments, a UE authentication identity may be transmitted in a process in which a UE switches from a source TNAP to a target TNAP.

For example, FIG. 6 is a schematic flowchart 1 of a communication method according to an embodiment of this application. The communication method is applicable to communication between the UE, the TNAP, and the TNGF shown in FIG. 5.

As shown in FIG. 6, the communication method includes the following steps.

S601: In a procedure in which a UE accesses a TNGF via a source TNAP, the TNGF obtains a UE authentication identity, and obtains a TNGF key.

The TNGF key is a shared key between the TNGF and the UE. The TNGF key may be generated based on a long-term key.

The UE authentication identity may be used by the TNGF to identify the UE when the UE performs a TNAP switch. For example, the UE authentication identity may be a re-authentication identity (Re-authentication identity, Reauth ID).

In a possible design solution, the UE authentication identity is directly transmitted between the UE and the TNGF. In this case, the procedure in which the UE accesses the TNGF via the source TNAP may include S200 to S213 shown in FIG. 2 and a subsequent procedure of data transmission between the UE and the TNGF. In this case, before the TNGF obtains the UE authentication identity, the communication method may further include one or more of S200 to S213.

In this case, the TNGF may obtain the authentication identity of the UE in a procedure of data transmission between the UE and the TNGF after S213.

The TNGF may obtain the TNGF key in a process of performing S210a shown in FIG. 2. For example, the TNGF key may be carried in the initial context setup request message in S210a.

In another possible design solution, at least a part of parameters used to generate the UE authentication identity are transmitted between the UE and the TNGF. In this case, the procedure in which the UE accesses the TNGF via the source TNAP may include S200 to S210e shown in FIG. 2. In this case, before the TNGF obtains the UE authentication identity, the communication method may further include one or more of S200 to S209d.

In this case, the step of obtaining the UE authentication identity by the TNGF may be between S210b and S210d. For specific implementation, refer to related descriptions of S701 to S703 in FIG. 7.

The TNGF may obtain the TNGF key by performing S210a in FIG. 2 or S700 in FIG. 7. In other words, the TNGF key is carried in the initial context setup request message.

S602: In the procedure in which the UE accesses the TNGF via the source TNAP, the UE obtains the UE authentication identity, and generates the TNGF key.

When the UE authentication identity is directly transmitted between the UE and the TNGF, the UE may obtain the UE authentication identity in the procedure of data transmission between the UE and the TNGF after S213. In S602, that the UE obtains the UE authentication identity includes: The UE receives the UE authentication identity from the TNGF via the source TNAP.

In this case, before the UE obtains the UE authentication identity, the communication method shown in FIG. 6 may further include: The UE accesses the TNGF via the source TNAP. For a specific implementation principle, refer to S200 to S213. Details are not described herein again.

That the UE obtains the TNGF key may be that the UE generates the TNGF key based on the long-term key. Details are not described herein again.

In another possible design solution, at least the part of the parameters used to generate the UE authentication identity are transmitted between the UE and the TNGF. In this case, for a principle of obtaining the UE authentication identity by the UE, refer to related descriptions of S700 to S706 in FIG. 7. Details are not described herein.

That the UE obtains the TNGF key may be that the UE generates the TNGF key based on the long-term key. Details are not described herein again.

S603: The UE determines to switch from the source TNAP to a target TNAP.

A case in which the UE switches from the source TNAP to the target TNAP may be that the UE detects that signal quality of the source TNAP is less than a first signal quality threshold, and signal quality of the target TNAP is less than a second signal quality threshold.

For an implementation principle of S603, refer to the implementation principle of S302. Details are not described herein again.

S604: The UE establishes a layer 2 connection to the target TNAP.

For an implementation principle of S604, refer to the implementation principle of S303. Details are not described herein again.

S605: The target TNAP sends an identity request message to the UE. Correspondingly, the UE receives the identity request message from the target TNAP.

For an implementation principle of S605, refer to the implementation principle of S304. Details are not described herein again.

S606: The UE sends a first message to the TNGF via the target TNAP. Correspondingly, the TNGF receives the first message from the UE via the target TNAP.

It may be understood that S606 may be performed when the UE switches from the source TNAP to the target TNAP. The first message includes the UE authentication identity and a first verification parameter. The first verification parameter is generated by the UE based on the TNGF key and at least the UE authentication identity.

Optionally, the first message may further include a mobility switch indication. The mobility switch indication may indicate that the UE switches from the source TNAP to the target TNAP. In other words, before accessing the target TNAP, the UE has accessed another TNAP located in a same TNGF as the target TNAP. Before S606, the method provided in FIG. 6 may further include step a1.

Step al: The UE generates the first verification parameter based on the TNGF key and at least the UE authentication identity.

The following describes step a1 with reference to a manner of generating the first verification parameter.

For example, when the first message includes the UE authentication identity, the first verification parameter may be generated based on the TNGF key and the UE authentication identity. The following provides descriptions with reference to a generation manner 1.1 or a generation manner 1.2.

**Generation manner 1.1:** The first verification parameter is directly generated based on the UE authentication identity and the TNGF key.

In this case, step al may include: The UE calculates a first message authentication code based on the TNGF key, the UE authentication identity, and a preconfigured function, to obtain the first verification parameter. For example, the UE inputs the UE authentication identity used as an input parameter and the TNGF key used as an input key into the preconfigured function, to obtain the first message authentication code, namely, the first verification parameter, through calculation.

The preconfigured function may be implemented by using one or more of the following: message digest algorithm (message-digest algorithm, MD5), secure hash algorithm 1 (secure hash algorithm 1, SHA-1), and SHA-256. Details are not described below.

In some possible design solutions, the preconfigured function may also be referred to as a message authentication code generation function.

**Generation manner 1.2:** An intermediate key is first generated based on the TNGF key, and the first verification parameter is generated.

In this case, step al may include step a1.1 and step al.2.

Step a1.1: The UE generates the intermediate key based on the TNGF key.

In a possible design solution, the UE generates the intermediate key based on the TNGF key and a first type distinguisher (usage type distinguisher). The UE may input the TNGF key and the first type distinguisher into a key generation function (key derivation function, KDF), to obtain the intermediate key. The first type distinguisher identifies that a type of a generated key is an intermediate key. For example, the first type distinguisher may be 0x03. It may be understood that input parameters of the key generation function may further include a fixed code, for example, 0x84.

In another possible design solution, the UE may generate the intermediate key based on the TNGF key, a first freshness parameter, and a second freshness parameter.

The first freshness parameter is a nonce generated by the UE or a counter value, and the second freshness parameter is the nonce generated by the UE or the counter value. This is not specifically limited in this embodiment.

Step a1.2: The UE calculates a first message authentication code based on the intermediate key, the UE authentication identity, and the preconfigured function, to obtain the first verification parameter.

For example, the UE inputs the UE authentication identity used as an input parameter and the intermediate key used as an input key into a message authentication code generation function, to obtain the first message authentication code, namely, the first verification parameter, through calculation.

For the preconfigured function, refer to the related descriptions of the generation manner 1.1. Details are not described herein again.

When the first message includes the UE authentication identity, the first verification parameter may alternatively be generated based on the following generation manner 1.3 or generation manner 1.4.

Generation manner 1.3: The first verification parameter is directly generated based on the mobility switch indication, the UE authentication identity, and the TNGF key.

In this case, step al may include: The UE calculates a first message authentication code based on the TNGF key, the UE authentication identity, the mobility switch indication, and a preconfigured function, to obtain the first verification parameter.

For a generation principle of the preconfigured function, refer to the related descriptions of the generation manner 1.1. For a generation principle of the first verification parameter, refer to the related descriptions of the generation manner 1.1. A difference lies in that input parameters input into the preconfigured function include the UE authentication identity and the mobility switch indication.

Generation manner 1.4: An intermediate key is first generated based on the TNGF key, and the first verification parameter is generated.

In this case, step al may include step a1.3 and step al.4.

Step a1.3: The UE generates the intermediate key based on the TNGF key.

For an implementation principle of step al.3, refer to the related descriptions of step a1.1 in the generation manner 1.2. Details are not described herein again.

Step a1.4: The UE calculates a first message authentication code based on the intermediate key, the UE authentication identity, the mobility switch indication, and the preconfigured function, to obtain the first verification parameter. For an implementation principle of the generation manner 1.4, refer to the related descriptions of the generation manner 1.2. A difference lies in that input parameters input into the preconfigured function include the UE authentication identity and the mobility switch indication.

Optionally, if the UE receives an EAP identity request message, for example, the identity request message, from the target TNAP before S606, the first message may be an identity response message, for example, an EAP identity response message.

S607: The TNGF checks the first verification parameter based on the TNGF key.

For ease of understanding, the following further describes S607 with reference to the generation manner of the first verification parameter in different cases.

Case 1.1: When the first verification parameter is generated in the generation manner 1.1, S607 may include step b1 and step b2.

Step b1: The TNGF generates a sixth verification parameter based on the UE authentication identity and the TNGF key.

Step b2: The TNGF determines whether the first verification parameter matches the sixth verification parameter. Case 1.2: When the first verification parameter is generated in the generation manner 1.2, S607 may include step b3 to step b5.

Step b3: The TNGF generates the intermediate key based on the TNGF key.

For an implementation principle of step b3, refer to step a1.1. A difference lies in that the intermediate key in step b3 is generated by the TNGF.

Step b4: The TNGF generates a sixth verification parameter based on the intermediate key and the UE authentication identity.

For a generation principle of the sixth verification parameter, refer to the generation principle of the first verification parameter in the generation manner 1.2. Details are not described herein again.

Step b5: The TNGF determines whether the first verification parameter matches the sixth verification parameter. Case 1.3: When the first verification parameter is generated in the generation manner 1.3, S607 may include step b6 and step b7.

Step b6: The TNGF generates a sixth verification parameter based on the TNGF key, the UE authentication identity, and the mobility switch indication.

Step b7: The TNGF determines whether the first verification parameter matches the sixth verification parameter. Case 1.4: When the first verification parameter is generated in the generation manner 1.4, S607 may include step b8 to step b10.

Step b8: The TNGF generates the intermediate key based on the TNGF key.

For an implementation principle of step b8, refer to step a1.1. A difference lies in that the intermediate key in step b8 is generated by the TNGF.

Step b9: The TNGF generates a sixth verification parameter based on the intermediate key, the UE authentication identity, and the mobility switch indication.

For a generation principle of the sixth verification parameter, refer to the generation principle of the first verification parameter in the generation manner 1.4. Details are not described herein again.

Step b10: The TNGF determines whether the first verification parameter matches the sixth verification parameter.

It may be understood that the first verification parameter matches the sixth verification parameter, that is, the first verification parameter is successfully checked. The first verification parameter does not match the sixth verification parameter, that is, the first verification parameter fails to be checked. For example, that the first verification parameter matches the sixth verification parameter may mean that the first verification parameter is the same as the sixth verification parameter.

For a same UE, a TNGF key stored in the UE is the same as a TNGF key corresponding to the UE stored in the TNGF. Because keys for generating the first verification parameter and the second verification parameter are both TNGF keys and TNonces, the TNGF can implement, by performing S608, authentication on the UE and integrity check of the UE authentication identity. If the first verification parameter matches the sixth verification parameter, it may indicate that the UE is successfully authenticated. In other words, the UE is a UE that actually performs a TNAP switch, and the UE authentication identity is not tampered with. If the first verification parameter does not match the sixth verification parameter, it may indicate that the UE fails to be authenticated. In other words, the UE is not a UE that actually performs a TNAP switch, or the UE authentication identity is tampered with.

S608: When the first verification parameter is successfully checked, the TNGF generates a target key.

In other words, the TNGF generates the target key when the first verification parameter matches the sixth verification parameter.

In a possible design solution, in S608, the TNGF may directly generate the target key based on the TNGF key. For example, the TNGF generates the target key based on the TNGF key and a count parameter.

The TNGF determines the target key based on the TNGF key, a second type distinguisher, and the count parameter. The count parameter may be a count value of a counter, and the count value may be determined based on a quantity of times that the UE switches between TNAPs. For example, the count value is the quantity of times that the UE switches between the TNAPs. The count parameter may alternatively be a nonce, and the nonce is generated by the TNGF each time switch is performed.

For example, the TNGF may input the TNGF key, the second type distinguisher, and the count parameter into a key generation function, so that the target key can be obtained.

It may be understood that input parameters of the key generation function may further include a fixed code, for example, 0x84.

For example, the second type distinguisher may be 0x02.

It may be understood that the key generation function in S608 still uses the key generation function defined in A22 of TS33.501. Details are not described herein.

In another possible design solution, S608 may include: The TNGF may generate the target key based on the TNGF key, the first freshness parameter, and the second freshness parameter.

In still another possible design solution, the intermediate key may be obtained based on the TNGF key, and the target key is generated based on the intermediate key. In this case, S608 may include step c1 and step c2.

Step c1: The TNGF generates the intermediate key based on the TNGF key.

For an implementation principle of step c1, refer to the related descriptions of step b3 or step b8. Details are not described herein again.

It may be understood that step c1 and step b3 may be a same step, or may be different steps. Alternatively, step c1 and step b8 may be a same step, or may be different steps.

Step c2: The TNGF generates the target key based on the intermediate key.

For example, the TNGF determines the target key based on the intermediate key and a third type distinguisher, for example, 0x02.

For example, the TNGF may input the intermediate key and the third type distinguisher into a key generation function, so that the target key can be obtained.

It may be understood that input parameters of the key generation function may further include a fixed code, for example, 0x84.

S609: The TNGF sends a notification request message to the target TNAP. Correspondingly, the target TNAP receives the notification request message from the TNGF.

The notification request message includes the target key, a first nonce, and a seventh verification parameter. The target key is used to secure communication between the UE and the target TNAP. The seventh verification parameter is generated based on the TNGF key and the first nonce.

For a generation principle of the seventh verification parameter, refer to the generation manner 1.1 or the generation manner 1.2. Details are not described herein again.

For an implementation principle of S609, refer to the related descriptions of S308. Details are not described herein again.

In a possible design solution, the first nonce and the TNGF key may be used together to generate the target key.

In addition, the method provided in FIG. 6 may further include S610 to S613.

S610: The target TNAP sends the notification request message to the UE. Correspondingly, the UE receives the notification request message from the target TNAP.

The notification request message includes the following information elements: a start security mode (start security mode) message, the first nonce, and the seventh verification parameter.

S611: The UE checks the seventh verification parameter.

For example, S611 may include: The UE generates an eighth verification parameter based on the received first nonce and the TNGF key. The UE determines whether the seventh verification parameter is consistent with the eighth verification parameter.

The seventh verification parameter matches the eighth verification parameter, that is, the seventh verification parameter is successfully checked. The seventh verification parameter does not match the eighth verification parameter, that is, the seventh verification parameter fails to be checked.

For a generation principle of the eighth verification parameter, refer to the generation manner 1.1 or the generation manner 1.2. Details are not described herein again.

S612: When the seventh verification parameter matches the eighth verification parameter, the UE sends a notification response message to the TNGF via the target TNAP.

The notification response message includes a mobility switch state (mobility switch complete) message. The mobility switch state message indicates that the UE successfully generates a target key.

The notification response message may be an EAP-5G notification response message.

It should be noted that the generation principle of the first verification parameter is the same as that of the sixth verification parameter. The generation principle of the seventh verification parameter is the same as that of the eighth verification parameter. The intermediate key for generating the first verification parameter and the sixth verification parameter may be the same as or different from an intermediate key for generating the seventh verification parameter and the eighth verification parameter.

S613: The UE establishes a security connection to the target TNAP by using the target key.

For an implementation principle of S613, refer to the related descriptions of S311. Details are not described herein again.

It should be noted that an execution sequence of the steps shown in FIG. 6 is merely used as an example. During actual implementation, a sequence of different steps is logical.

According to the communication method provided in FIG. 6, when the UE switches from the source TNAP to the target TNAP, the UE may send the first verification parameter when sending the UE authentication identity to the target TNAP. The first verification parameter is generated based on the TNGF key and the UE authentication identity for the TNGF. However, the TNGF store a TNGF key for the UE. In this way, the TNGF can perform integrity authentication on the UE authentication identity and perform identity authentication on the UE, based on the received UE authentication identity and the TNGF key, so that when an attacker forges the UE to initiate a TNAP switch, the UE forged by the attacker can be identified. This prevents the UE forged by the attacker from accessing the target TNAP, to improve communication security.

In addition, when the target key is generated based on the count parameter of the counter, an access target key forged by the attacker may be identified, to avoid changing a count parameter of a counter in the TNGF, so that a count parameter in the UE is consistent with the count parameter in the TNGF, to improve an access success rate of the UE. In some other embodiments, a parameter used to generate a UE authentication identity may be transmitted in a procedure in which the UE accesses a TNGF for the first time. In this case, integrity protection may be performed on the parameter that is used to generate the UE authentication identity and that is transmitted in the procedure in which the UE accesses the TNGF for the first time.

FIG. 7 is a schematic flowchart 2 of a communication method according to an embodiment of this application. As shown in FIG. 7, the communication method includes S701 to S711.

S700: A TNGF receives an initial context setup request message from an AMF.

When the TNGF receives the initial context setup request message from the AMF, it may be determined that a UE accesses the TNGF for the first time.

The initial context setup request message may include a TNGF key.

S701: The TNGF sends a notification request message to the UE via a source TNAP. Correspondingly, the UE receives the notification request message from the TNGF via the source TNAP.

It may be understood that S701 is performed when the TNGF receives the initial context setup request message from the AMF. In other words, S701 is performed in a process in which the UE accesses the TNGF for the first time.

The notification request message includes a TNonce and a second verification parameter. The TNonce is used as a part of input parameters for generating the UE authentication identity. The second verification parameter is generated based on the TNGF key and at least the TNonce.

In some possible design solutions, the notification request message may further include one or more of the following: an address of the TNGF or an identifier (TNGF identifier, TNGF ID) of the TNGF.

In other words, the notification request message may include the TNonce, or the notification request message may include the TNonce and the identifier of the TNGF, or the notification request message may include the TNonce and the address of the TNGF, or the notification request message may include the TNonce, the address of the TNGF, and the identifier of the TNGF.

In this case, the second verification parameter may alternatively be generated based on the TNGF key, the TNonce, and the one or more of the following: the address of the TNGF or the TNGF-ID.

Before S701, the method provided in FIG. 7 may further include step d1.

Step d1: The TNGF generates the second verification parameter based on the TNGF key and at least the TNonce. For ease of understanding, the following separately describes a generation principle of the second verification parameter with reference to information included in the notification request message.

When the notification request message includes the TNonce, the second verification parameter may be generated according to the following generation mode 2.1 and generation mode 2.2.

Generation manner 2.1: The TNGF directly generates the second verification parameter based on the TNGF key.

In this case, step d1 may include: The TNGF calculates a second message authentication code based on the TNGF key, the TNonce, and a preconfigured function, to obtain the second verification parameter.

For example, the TNGF inputs the TNonce used as an input parameter and the TNGF key used as an input key into the preconfigured function, to obtain the second message authentication code, namely, the second verification parameter, through calculation.

Generation manner 2.2: The TNGF first generates an intermediate key based on the TNGF key, and generates the second verification parameter by using the intermediate key.

In this case, step d1 may include step d1.1 and step d1.2.

Step d1.1: The TNGF generates the intermediate key based on the TNGF key.

For an implementation principle of d1.1, refer to the principle of generating the intermediate key in step a1.1.

Step d1.2: The TNGF calculates a second message authentication code based on the intermediate key, the TNonce, and a preconfigured function, to obtain the second verification parameter.

An implementation principle of the generation manner 2.2 is similar to that of the generation manner 2.1, and a difference lies in that an input key is the intermediate key.

When the notification request message includes the TNonce and the TNGF-ID, the second verification parameter may be generated according to the following generation mode 2.3 and generation mode 2.4.

Generation manner 2.3: The TNGF directly generates the second verification parameter by directly using the TNGF key.

An implementation principle of the generation manner 2.3 is similar to that of the generation manner 2.1, and a difference lies in that input parameters include the TNonce and the TNGF-ID.

Generation manner 2.4: The TNGF first generates an intermediate key based on the TNGF key, and generates the second verification parameter by using the intermediate key.

An implementation principle of the generation manner 2.4 is similar to that of the generation manner 2.2, and a difference lies in that input parameters are TNonce and TNGF-ID.

When the notification request message includes the TNonce, and the address of the TNGF, the second verification parameter may be generated according to the following generation mode 2.5 and generation mode 2.6.

Generation manner 2.5: The TNGF directly generates the second verification parameter by directly using the TNGF key.

An implementation principle of the generation manner 2.5 is similar to that of the generation manner 2.1, and a difference lies in that input parameters include the TNonce and the address of the TNGF.

Generation manner 2.6: The TNGF first generates an intermediate key based on the TNGF key, and generates the second verification parameter by using the intermediate key.

An implementation principle of the generation manner 2.6 is similar to that of the generation manner 2.2, and a difference lies in that input parameters are the TNonce and the address of the TNGF.

When the notification request message includes the TNonce, the TNGF-ID, and the address of the TNGF, the second verification parameter may be generated according to the following generation mode 2.7 and generation mode 2.8. Generation manner 2.7: The TNGF directly generates the second verification parameter by directly using the TNGF key.

An implementation principle of the generation manner 2.7 is similar to that of the generation manner 2.1, and a difference lies in that input parameters include the TNonce, the TNGF-ID, and the address of the TNGF. Generation manner 2.8: The TNGF first generates an intermediate key based on the TNGF key, and generates the second verification parameter by using the intermediate key.

An implementation principle of the generation manner 2.8 is similar to that of the generation manner 2.2, and a difference lies in that input parameters are the TNonce, the TNGF-ID, and the address of the TNGF.

The notification request message may be an EAP-5G notification request message.

S702: The UE checks the second verification parameter based on the TNGF key.

For ease of understanding, the following describes a procedure in which the UE authenticates the TNGF in different cases with reference to the generation manner of the second verification parameter.

Case 2.1: The second verification parameter is generated in the generation manner 2.1. In this case, S702 may include step e1 and step e2.

Step e1: The UE generates a third verification parameter based on the TNGF key and the TNonce.

A principle of generating the third verification parameter is similar to that in the generation manner 2.1. Details are not described herein again.

Step e2: If the second verification parameter matches the third verification parameter, the second verification parameter is successfully checked.

Case 2.2: The second verification parameter is generated in the generation manner 2.2. In this case, S702 may include step e3 to step e5.

Step e3: The UE generates an intermediate key based on the TNGF key.

Step e4: The UE generates a third verification parameter based on the intermediate key and the TNonce.

A principle of generating the third verification parameter is similar to that in the generation manner 2.2. Details are not described herein again.

Step e5: If the second verification parameter matches the third verification parameter, the second verification parameter is successfully checked.

Case 2.3: The second verification parameter is generated in the generation manner 2.3. In this case, S702 may include step e6 and step e7.

Step e6: The UE generates a third verification parameter based on the TNGF key, the TNonce, and the TNGF-ID.

A principle of generating the third verification parameter is similar to that in the generation manner 2.3. Details are not described herein again.

Step e7: If the second verification parameter matches the third verification parameter, the second verification parameter is successfully checked.

Case 2.4: The second verification parameter is generated in the generation manner 2.4. In this case, S702 may include step e8 to step e10.

Step e8: The UE generates an intermediate key based on the TNGF key.

Step e9: The UE generates a third verification parameter based on the intermediate key, the TNonce, and the TNGF-ID.

A principle of generating the third verification parameter is similar to that in the generation manner 2.4. Details are not described herein again.

Step e10: If the second verification parameter matches the third verification parameter, the second verification parameter is successfully checked.

Case 2.5: The second verification parameter is generated in the generation manner 2.5. In this case, S702 may include step e11 and step e12.

Step e11: The UE generates a third verification parameter based on the TNGF key, the TNonce, and the address of the TNGF.

A principle of generating the second verification parameter is similar to that in the generation manner 2.5. Details are not described herein again.

Step e12: If the second verification parameter matches the third verification parameter, the second verification parameter is successfully checked.

Case 2.6: The second verification parameter is generated in the generation manner 2.6. In this case, S702 may include step e13 to step e15.

Step e13: The UE generates an intermediate key based on the TNGF key.

Step el4: The UE generates a third verification parameter based on the intermediate key, the address of the TNGF, and the TNonce.

A principle of generating the third verification parameter is similar to that in the generation manner 2.6. Details are not described herein again.

Step e15: If the second verification parameter matches the third verification parameter, the second verification parameter is successfully checked.

Case 2.7: The second verification parameter is generated in the generation manner 2.7. In this case, S702 may include step e16 and step e17.

Step e16: The UE generates a third verification parameter based on the TNGF key, the address of the TNGF, the TNGF-ID, and the TNonce.

Step e17: If the second verification parameter matches the third verification parameter, the second verification parameter is successfully checked. A principle of generating the third verification parameter in step e17 is similar to that in the generation manner 2.7. Details are not described herein again.

Case 2.8: The second verification parameter is generated in the generation manner 2.8. In this case, S702 may include step e18 to step e20.

Step e18: The UE generates an intermediate key based on the TNGF key.

Step e19: The UE generates a third verification parameter based on the intermediate key, the address of the TNGF, the TNGF-ID, and the TNonce.

A principle of generating the third verification parameter is similar to that in the generation manner 2.8. Details are not described herein again.

Step e20: If the second verification parameter matches the third verification parameter, the second verification parameter is successfully checked.

For a principle of generating the intermediate key in the case 2.1 to the case 2.8, refer to the related descriptions of generating the intermediate key in the method provided in FIG. 6. Details are not described herein again.

In S702, the TNGF may be authenticated, and if the second verification parameter is successfully checked, the TNGF is successfully authenticated. If the second verification parameter fails to be checked, the TNGF fails to be authenticated. That the second verification parameter matches the third verification parameter may mean that the second verification parameter is the same as the third verification parameter. When the second verification parameter matches the third verification parameter, it indicates that the input parameter for generating the second verification parameter is not tampered with. When the second verification parameter does not match the third verification parameter, it indicates that the input parameter for generating the second verification parameter includes a tampered parameter.

It may be understood that before S702, the method provided in FIG. 7 may further include S400a to S409 in FIG. 4, or include S200 to S209d in FIG. 2. Details are not described herein again.

When the second verification parameter is successfully checked, the following S703 and S704 are performed.

S703: The UE generates a UE authentication identity based on the TNGF key and at least the TNonce and a UNonce. S704: The UE sends a notification response message to the TNGF via the source TNAP. Correspondingly, the TNGF receives the notification response message from the UE via the source TNAP.

The notification response message includes the UNonce and a fourth verification parameter.

For example, the notification response message may be an EAP-5G notification response message.

The fourth verification parameter is generated based on the TNGF key and the UNonce.

S705: The TNGF checks the fourth verification parameter based on the TNGF key.

In a possible design solution, S705 may include step f1 and step f2.

Step f1: The TNGF generates a fifth verification parameter based on the TNGF key and the UNonce.

Step f2: The TNGF determines whether the fourth verification parameter matches the fifth verification parameter.

In another possible design solution, S705 may include step f3 to step f5.

Step f3: The TNGF generates the intermediate key based on the TNGF key.

Step f4: The TNGF generates a fifth verification parameter based on the intermediate key and the UNonce.

Step f5: The TNGF determines whether the fourth verification parameter matches the fifth verification parameter.

If the fifth verification parameter matches the fourth verification parameter, the fourth verification parameter is successfully checked. In this case, it may indicate that the UNonce is not tampered with. If the fifth verification parameter does not match the fourth verification parameter, the fourth verification parameter fails to be checked. In this case, it may indicate that the UNonce is tampered with.

It should be noted that the generation principle of the second verification parameter is the same as that of the third verification parameter. The generation principle of the fourth verification parameter is the same as that of the fifth verification parameter. The intermediate key for generating the second verification parameter and the third verification parameter may be the same as or different from an intermediate key for generating the fourth verification parameter and the fifth verification parameter.

When the fourth verification parameter is successfully checked, the following S706 and S707 are performed.

S706: The TNGF generates a UE authentication identity based on the TNGF key and at least the TNonce and the UNonce.

S707: The TNGF sends an EAP success message and a source key for the source TNAP to the source TNAP.

The source key is used to secure communication between the UE and the source TNAP. The source key is generated based on the TNGF key. A generation manner of the source key is not described herein again.

For the generation manner of the source key, refer to S400d. Details are not described herein again.

For an implementation principle of S707, refer to S210d or S400d. Details are not described herein again.

S708: The source TNAP sends the EAP success message to the UE. Correspondingly, the UE receives the EAP success message from the source TNAP.

For an implementation principle of S708, refer to the related descriptions of S210e or S400e. Details are not described herein again.

S709: The UE establishes a security connection to the source TNAP.

For an implementation principle of S709, refer to the related descriptions of S211 or S401. Details are not described herein again.

It may be understood that, before S710, the method provided in FIG. 7 may further include S212 and S213 shown in FIG. 2.

S710: The UE determines to switch from the source TNAP to a target TNAP.

For an implementation principle of S710, refer to the related descriptions of S404. Details are not described herein again.

S711: The UE performs an incomplete authentication procedure, to establish a security connection to the target TNAP. For an implementation principle of S711, refer to the related descriptions of S405 to S420. Details are not described herein again.

In the communication method provided in FIG. 7, when the TNGF sends the TNonce to the UE, the TNonce may carry the second verification parameter used for integrity protection. The UE may generate the third verification parameter, and send the UNonce and the fourth verification parameter to the TNGF when the second verification parameter matches the third verification parameter. The second verification parameter is generated by the TNGF based on the TNGF key and at least the TNonce, and the fourth verification parameter is generated by the UE based on the TNGF key for the UE and the UNonce. Then, the TNGF generates the fifth verification parameter based on the UNonce and the TNGF key. In this way, integrity protection of the TNonce can be implemented by comparing the second verification parameter with the third verification parameter, and integrity protection of the TNonce can be implemented by comparing the fourth verification parameter with the fifth verification parameter, to improve communication security.

It should be noted that in this embodiment of this application, a message may be encapsulated between the UE and a TNAP, for example, the source TNAP or the target TNAP, at a layer 2. A message between the TNAP and the TNGF may be encapsulated by using AAA. In addition, in FIG. 6 and FIG. 7, the identity request messages in different steps are located in different data packets, and the identity response messages in different steps are located in different data packets. The notification request messages in different steps are in different data packets, and the notification response messages in different steps are in different data packets.

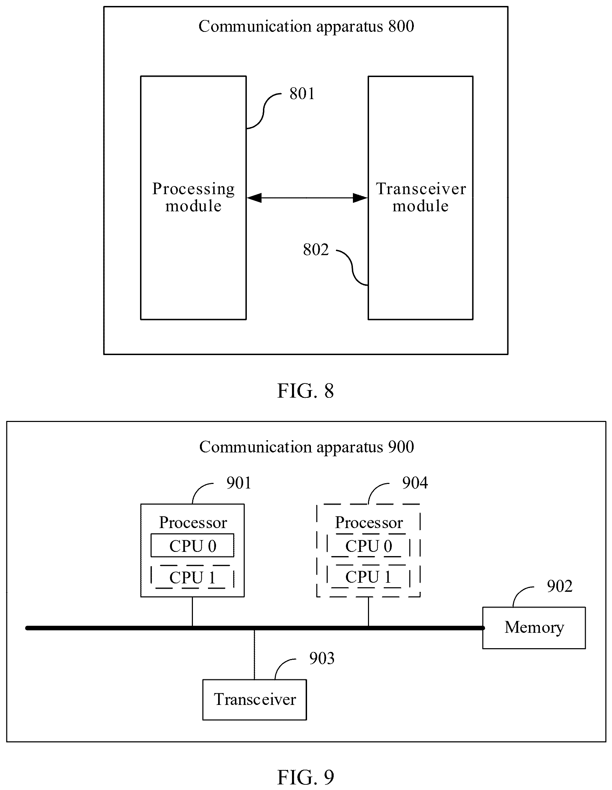

The foregoing describes, in detail with reference to FIG. 6 and FIG. 7, the communication method provided in embodiments of this application. The following describes, in detail with reference to FIG. 8 and FIG. 9, a communication apparatus configured to perform the communication method provided in embodiments of this application.

For example, FIG. 8 is a diagram 1 of a structure of a communication apparatus 800 according to an embodiment of this application. As shown in FIG. 8, the communication apparatus 800 includes a processing module 801 and a transceiver module 802. For ease of description, FIG. 8 shows only main parts of the communication apparatus 800. In some embodiments, the communication apparatus 800 may be used in the communication system shown in FIG. 5, and perform a function of the UE in FIG. 6.

The processing module 801 is configured to: in a procedure in which the communication apparatus 800 accesses a TNGF via a source TNAP, obtain a UE authentication identity, and generate a TNGF key. The TNGF key is a shared key between the TNGF and the communication apparatus 800. The transceiver module 802 is configured to: when the communication apparatus 800 switches from the source TNAP to a target TNAP, send a first message to the TNGF via the target TNAP. The first message includes the UE authentication identity and a first verification parameter. The first verification parameter is generated by the communication apparatus 800 based on the UE authentication identity and the TNGF key.

In a possible design solution, the processing module 801 is specifically configured to receive the UE authentication identity from the TNGF via the source TNAP.

In a possible design solution, the processing module 801 is further configured to access the TNGF via the source TNAP.

In a possible design solution, the first message is an identity response message, and the processing module 801 is further configured to: determine to switch from the source TNAP to the target TNAP, and establish a layer 2 connection to the target TNAP; and receive an identity request message from the target TNAP via the transceiver module 802. The identity request message is used to trigger the communication apparatus 800 to send the first message.

In a possible design solution, the transceiver module 802 may be further configured to receive a notification request message from the TNGF via the source TNAP. The notification request message includes a nonce TNonce of the TNGF and a second verification parameter. The second verification parameter is generated by the TNGF based on the TNGF key and the TNonce. The processing module 801 is further configured to generate a third verification parameter based on the TNGF key and the TNonce. The processing module 801 is further configured to: when the second verification parameter matches the third verification parameter, generate the UE authentication identity based on the TNGF key, the TNonce, and a nonce UNonce of the communication apparatus 800. The UNonce is generated by the communication apparatus 800.

Optionally, a sending module is further configured to: when the second verification parameter matches the third verification parameter, send a notification response message to the TNGF via the source TNAP. The notification response message includes a fourth verification parameter and the UNonce. The fourth verification parameter is generated based on the TNGF key and the UNonce.

In a possible design solution, the transceiver module 802 is further configured to receive a notification request message from the TNGF via the source TNAP. The notification request message includes a nonce TNonce of the TNGF and a second verification parameter. The second verification parameter is generated by the TNGF based on an intermediate key and the TNonce. The intermediate key is generated by the TNGF based on the TNGF key. The processing module 801 is specifically configured to: generate the intermediate key based on the TNGF key, and generate a third verification parameter based on the intermediate key and the TNonce. The processing module 801 is specifically configured to: when the second verification parameter matches the third verification parameter, generate the UE authentication identity based on the intermediate key, the TNonce, and a nonce UNonce of the communication apparatus 800. The UNonce is generated by the communication apparatus 800.

Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the intermediate key and the UNonce.

In a possible design solution, the transceiver module 802 is further configured to receive a notification request message from the TNGF via the source TNAP. The notification request message includes a nonce TNonce of the TNGF, an address of the TNGF, and a second verification parameter. The second verification parameter is generated by the TNGF based on the TNGF key, the TNonce, and the address of the TNGF. The processing module 801 is further configured to generate a third verification parameter based on the TNGF key, the TNonce, and the address of the TNGF. The transceiver module 802 is specifically configured to: when the second verification parameter matches the third verification parameter, generate the UE authentication identity based on the TNGF key, the TNonce, and a nonce UNonce of the communication apparatus 800.

Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the TNGF key and the UNonce.

In a possible design solution, the transceiver module 802 is further configured to receive a notification request message from the TNGF via the source TNAP. The notification request message includes a nonce TNonce of the TNGF, an address of the TNGF, and a second verification parameter. The second verification parameter is generated by the TNGF based on an intermediate key, the nonce TNonce of the TNGF, and the address of the TNGF. The intermediate key is generated by the TNGF based on the TNGF key. The processing module 801 is further configured to: generate the intermediate key based on the TNGF key, and generate a third verification parameter based on the intermediate key, the TNonce, and the address of the TNGF. The processing module 801 is further configured to: when the second verification parameter matches the third verification parameter, generate the UE authentication identity based on the intermediate key, the TNonce, a nonce UNonce of the communication apparatus 800, and the TNGF key. The UNonce is generated by the communication apparatus 800.

Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the intermediate key and the UNonce.

In a possible design solution, the transceiver module 802 is further configured to receive a notification request message from the TNGF via the source TNAP. The notification request message includes a nonce TNonce of the TNGF, an identifier of the TNGF, and a second verification parameter. The second verification parameter is generated by the TNGF based on the TNGF key, the TNonce, and the identifier of the TNGF. The processing module 801 is further configured to generate a third verification parameter based on the TNGF, the TNonce, and the identifier of the TNGF. The processing module 801 is specifically configured to: when the second verification parameter matches the third verification parameter, generate the UE authentication identity based on the TNGF key and at least the TNonce and a nonce UNonce of the communication apparatus 800. The UNonce is generated by the communication apparatus 800. Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the TNGF key and the UNonce.

In a possible design solution, the transceiver module 802 is further configured to receive a notification request message from the TNGF via the source TNAP. The notification request message includes a nonce TNonce of the TNGF, an identifier of the TNGF, and a second verification parameter. The second verification parameter is generated by the TNGF based on an intermediate key, the TNonce, and the identifier of the TNGF. The intermediate key is generated by the TNGF based on the TNGF key. The processing module 801 is further configured to: generate the intermediate key based on the TNGF key, and generate a third verification parameter based on the intermediate key, the TNonce, and the identifier of the TNGF. The processing module 801 is specifically configured to: when the second verification parameter matches the third verification parameter, generate the UE authentication identity based on the intermediate key and at least the TNonce and a nonce UNonce of the communication apparatus 800. The UNonce is generated by the communication apparatus 800.

Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the intermediate key and the UNonce.

In a possible design solution, the transceiver module 802 is further configured to receive a notification request message from the TNGF via the source TNAP. The notification request message includes a nonce TNonce of the TNGF, an address of the TNGF, an identifier of the TNGF, and a second verification parameter. The second verification parameter is generated by the TNGF based on the TNGF key, the TNonce, the address of the TNGF, and the identifier of the TNGF. The processing module 801 is further configured to generate a third verification parameter based on the TNGF key, the TNonce, the address of the TNGF, and the identifier of the TNGF. The processing module 801 is specifically configured to: when the second verification parameter matches the third verification parameter, generate the UE authentication identity based on the TNGF key and at least the TNonce and a nonce UNonce of the communication apparatus 800. The UNonce is generated by the communication apparatus 800.

Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the TNGF key and the UNonce.

In a possible design solution, the transceiver module 802 is further configured to receive a notification request message from the TNGF via the source TNAP. The notification request message includes a TNonce, an address of the TNGF, an identifier of the TNGF, and a second verification parameter. The second verification parameter is generated by the TNGF based on an intermediate key, the TNonce, the address of the TNGF, and the identifier of the TNGF. The intermediate key is generated by the TNGF based on the TNGF key. The processing module 801 is further configured to: generate the intermediate key based on the TNGF key, and generate a third verification parameter based on the intermediate key, the TNonce, the address of the TNGF, and the identifier of the TNGF. The processing module 801 is specifically configured to: when the second verification parameter matches the third verification parameter, generate the UE authentication identity based on the intermediate key and at least the TNonce and a nonce UNonce of the communication apparatus 800. The UNonce is generated by the communication apparatus 800.

Optionally, the transceiver module 802 is further configured to: when the second verification parameter matches the third verification parameter, send a notification response message to the TNGF via the source TNAP. The notification response message includes a fourth verification parameter and the UNonce. The fourth verification parameter is generated based on the intermediate key and the UNonce.

Optionally, the processing module 801 is further used by the communication apparatus 800 to generate the UNonce. In a possible design solution, the processing module 801 is further configured to generate the first verification parameter based on the TNGF key and the authentication identity of the communication apparatus 800.

Optionally, the processing module 801 is specifically configured to calculate a first message authentication code based on the TNGF key, the authentication identity of the communication apparatus 800, and a preconfigured function, to obtain the first verification parameter.

Alternatively, optionally, the processing module 801 is specifically configured to: generate the intermediate key based on the TNGF key, and calculate a first message authentication code based on the intermediate key, the authentication identity of the communication apparatus 800, and a preconfigured function, to obtain the first verification parameter. In a possible design solution, the TNGF key is generated based on a long-term key.

Optionally, the transceiver module 802 may include a receiving module and a sending module (not shown in FIG. 8). The transceiver module 802 is configured to implement a sending function and a receiving function of the communication apparatus 800.

Optionally, the communication apparatus 800 may further include a storage module (not shown in FIG. 8). The storage module stores a program or instructions. When the processing module 801 executes the program or the instructions, the communication apparatus 800 can perform the function of the UE in the communication method shown in FIG. 6. It should be understood that the processing module 801 in the communication apparatus 800 may be implemented by a processor or a processor-related circuit component, and may be a processor or a processing unit. The transceiver module 802 may be implemented by a transceiver or a transceiver-related circuit component, and may be a transceiver or a transceiver unit.

It should be noted that the communication apparatus 800 may be a terminal device, or may be a chip (system) or another part or component that may be disposed in the terminal device, or may be an apparatus including the terminal device. This is not limited in this application.

In some other embodiments, the communication apparatus 800 may be used in the communication system shown in FIG. 5, and perform a function of the TNGF in the communication method shown in FIG. 6.

The processing module 801 is configured to: in a procedure in which a UE accesses the communication apparatus 800 via a source TNAP, obtain a UE authentication identity and a TNGF key. The TNGF key is a shared key between the communication apparatus 800 and the UE. The transceiver module 802 is configured to receive a first message from the UE via a target TNAP. The first message includes the UE authentication identity and a first verification parameter. The first verification parameter is generated by the communication apparatus 800 based on the UE authentication identity and the TNGF key. The processing module 801 is further configured to: when the first verification parameter is successfully checked, generate a target key based on the TNGF key. The target key is used to secure communication between the UE and the target TNAP.

In a possible design solution, the processing module 801 is specifically configured to generate the UE authentication identity.

Optionally, the transceiver module 802 is further configured to send the UE authentication identity to the UE via the source TNAP.

In a possible design solution, the transceiver module 802 is further configured to send a notification request message to the UE via the source TNAP. The notification request message includes a TNonce and a second verification parameter. The second verification parameter is generated by the communication apparatus 800 based on the TNGF key and the TNonce. The transceiver module 802 is further configured to receive a notification response message from the UE via the source TNAP. The notification response message includes a fourth verification parameter and a nonce UNonce of the UE. The fourth verification parameter is generated by the UE based on the TNGF key and the UNonce. The processing module 801 is further configured to generate a fifth verification parameter based on the TNGF key and the UNonce.

The processing module 801 is specifically configured to: when the fourth verification parameter matches the fifth verification parameter, generate the UE authentication identity based on the TNGF key, the TNonce, and the UNonce. In a possible design solution, the transceiver module 802 is further configured to: generate an intermediate key based on the TNGF key, and send a notification request message to the UE via the source TNAP. The notification request message includes a TNonce and a second verification parameter. The second verification parameter is generated by the communication apparatus 800 based on the intermediate key and the TNonce. The transceiver module 802 is further configured to receive a notification response message from the UE via the source TNAP. The notification response message includes a fourth verification parameter and a nonce UNonce of the UE. The fourth verification parameter is generated by the UE based on the intermediate key and the UNonce. The processing module 801 is further configured to generate a fifth verification parameter based on the intermediate key and the UNonce. The processing module 801 is specifically configured to: when the fourth verification parameter matches the fifth verification parameter, generate the UE authentication identity based on the intermediate key, the TNonce, and the UNonce.

In a possible design solution, the transceiver module 802 is further configured to send a notification request message to the UE via the source TNAP. The notification request message includes a TNonce, an address of the communication apparatus 800, and a second verification parameter. The second verification parameter is generated by the communication apparatus 800 based on the TNGF key, the TNonce, and the address of the communication apparatus 800. The transceiver module 802 is further configured to receive a notification response message from the UE via the source TNAP. The notification response message includes a fourth verification parameter and a nonce UNonce of the UE. The fourth verification parameter is generated by the UE based on the TNGF key and the UNonce. The processing module 801 is further configured to generate a fifth verification parameter based on the TNGF key and the UNonce. The processing module 801 is specifically configured to: when the fourth verification parameter matches the fifth verification parameter, generate the UE authentication identity based on the TNGF key and at least the TNonce and the UNonce.

In a possible design solution, the transceiver module 802 is further configured to: generate an intermediate key based on the TNGF key, and send a notification request message to the UE via the source TNAP. The notification request message includes a TNonce, an address of the communication apparatus 800, and a second verification parameter. The second verification parameter is generated by the communication apparatus 800 based on the intermediate key, the TNonce, and the address of the communication apparatus 800. The transceiver module 802 is further configured to receive a notification response message from the UE via the source TNAP. The notification response message includes a fourth verification parameter and a nonce UNonce of the UE. The fourth verification parameter is generated by the UE based on the intermediate key and the UNonce. The processing module 801 is further configured to generate a fifth verification parameter based on the intermediate key and the UNonce. The processing module 801 is specifically configured to: when the fourth verification parameter matches the fifth verification parameter, generate the UE authentication identity based on the intermediate key and at least the TNonce and the UNonce.

In a possible design solution, the transceiver module 802 is further configured to send a notification request message to the UE via the source TNAP. The notification request message includes a TNonce, an identifier of the communication apparatus 800, and a second verification parameter. The second verification parameter is generated by the communication apparatus 800 based on the TNGF key, the TNonce, and the identifier of the communication apparatus 800. The transceiver module 802 is further configured to receive a notification response message from the UE via the source TNAP. The notification response message includes a fourth verification parameter and a nonce UNonce of the UE. The fourth verification parameter is generated by the UE based on the TNGF key and the UNonce. The processing module 801 is further configured to generate a fifth verification parameter based on the TNGF key and the UNonce. The processing module 801 is specifically configured to: when the fourth verification parameter matches the fifth verification parameter, generate the UE authentication identity based on the TNGF key and at least the TNonce and the UNonce.

In a possible design solution, the transceiver module 802 is further configured to: generate an intermediate key based on the TNGF key, and send a notification request message to the UE via the source TNAP. The notification request message includes a TNonce, an identifier of the communication apparatus 800, and a second verification parameter. The second verification parameter is generated by the communication apparatus 800 based on the intermediate key, the TNonce, and the identifier of the communication apparatus 800. The transceiver module 802 is further configured to receive a notification response message from the UE via the source TNAP. The notification response message includes a fourth verification parameter and a nonce UNonce of the UE. The fourth verification parameter is generated by the UE based on the intermediate key and the UNonce. The processing module 801 is further configured to generate a fifth verification parameter based on the intermediate key and the UNonce. The processing module 801 is specifically configured to: when the fourth verification parameter matches the fifth verification parameter, generate the UE authentication identity based on the intermediate key and at least the TNonce and the UNonce.

In a possible design solution, the transceiver module 802 is further configured to send a notification request message to the UE via the source TNAP. The notification request message includes a TNonce, an address of the communication apparatus 800, an identifier of the communication apparatus 800, and a second verification parameter. The second verification parameter is generated by the communication apparatus 800 based on the TNGF key, the TNonce, the address of the communication apparatus 800, and the identifier of the communication apparatus 800. The transceiver module 802 is further configured to receive a notification response message from the UE via the source TNAP. The notification response message includes a fourth verification parameter and a nonce UNonce of the UE. The fourth verification parameter is generated by the UE based on the TNGF key and the UNonce. The processing module 801 is further configured to generate a fifth verification parameter based on the TNGF key and the UNonce. The processing module 801 is specifically configured to: when the fourth verification parameter matches the fifth verification parameter, generate the UE authentication identity based on the TNGF key and at least the TNonce and the UNonce. In a possible design solution, the transceiver module 802 is further configured to: generate an intermediate key based on the TNGF key, and send a notification request message to the UE via the source TNAP. The notification request message includes a TNonce, an address of the communication apparatus 800, an identifier of the communication apparatus 800, and a second verification parameter. The second verification parameter is generated by the communication apparatus 800 based on the intermediate key, the TNonce, the address of the communication apparatus 800, and the identifier of the communication apparatus 800. The transceiver module 802 is further configured to receive a notification response message from the UE via the source TNAP. The notification response message includes a fourth verification parameter and a nonce UNonce of the UE. The fourth verification parameter is generated by the UE based on the intermediate key and the UNonce. The processing module 801 is further configured to generate a fifth verification parameter based on the intermediate key and the UNonce. The processing module 801 is specifically configured to: when the fourth verification parameter matches the fifth verification parameter, generate the UE authentication identity based on the intermediate key and at least the TNonce and the UNonce.

In a possible design solution, the processing module 801 is further configured to generate a sixth verification parameter based on the UE authentication identity and the TNGF key. The processing module 801 is specifically configured to: when the first verification parameter matches the sixth verification parameter, generate the target key based on the TNGF key.

In a possible design solution, the TNGF key is generated by an AMF based on a long-term key.

Optionally, the transceiver module 802 may include a receiving module and a sending module (not shown in FIG. 8). The transceiver module 802 is configured to implement a sending function and a receiving function of the communication apparatus 800.

Optionally, the communication apparatus 800 may further include a storage module (not shown in FIG. 8). The storage module stores a program or instructions. When the processing module 801 executes the program or the instructions, the communication apparatus 800 can perform the function of the TNGF in the communication method shown in FIG. 6.

It should be understood that the processing module 801 in the communication apparatus 800 may be implemented by a processor or a processor-related circuit component, and may be a processor or a processing unit. The transceiver module 802 may be implemented by a transceiver or a transceiver-related circuit component, and may be a transceiver or a transceiver unit.

It should be noted that, the communication apparatus 800 may be a network device, for example, a TNGF, or may be a chip (system) or another part or component that may be disposed in the network device, or may be an apparatus including the network device. This is not limited in this application.

In some other embodiments, the communication apparatus 800 may be used in the communication system shown in FIG. 5, and perform a function of the UE in the communication method shown in FIG. 7.

The communication method is applied to a procedure in which a UE accesses a TNGF for the first time.

The transceiver module 802 is configured to receive a notification request message from the TNGF via a source TNAP. The notification request message includes a second verification parameter and at least a nonce TNonce of the TNGF. The second verification parameter is generated based on a TNGF key and at least the TNonce. The TNGF key is a shared key between the communication apparatus 800 and the TNGF. The processing module 801 is configured to generate a third verification parameter based on the TNGF key and at least the TNonce. The transceiver module 802 is further configured to: when the second verification parameter matches the third verification parameter, send a notification response message to the TNGF via the source TNAP. The notification response message includes a nonce UNonce of the communication apparatus 800 and a fourth verification parameter. The fourth verification parameter is generated by the communication apparatus 800 based on the UNonce and the TNGF key.

In a possible design solution, the processing module 801 is specifically configured to generate an intermediate key based on the TNGF key. The communication apparatus 800 generates the third verification parameter based on the intermediate key and the TNonce.

In a possible design solution, the notification request message further includes an address of the TNGF. The second verification parameter is generated by the TNGF based on the TNGF key, the TNonce, and the address of the TNGF. The processing module 801 is specifically configured to generate the third verification parameter based on the TNGF key, the TNonce, and the address of the TNGF.

In a possible design solution, the notification request message further includes an address of the TNGF. The second verification parameter is generated by the TNGF based on an intermediate key, the TNonce, and the address of the TNGF. The intermediate key is generated by the communication apparatus 800 based on the TNGF key. The processing module 801 is specifically configured to generate the third verification parameter based on the intermediate key, the TNonce, and the address of the TNGF.

In a possible design solution, the notification request message further includes an identifier of the TNGF. The second verification parameter is generated by the TNGF based on the TNGF key, the TNonce, and the identifier of the TNGF. The processing module 801 is specifically configured to generate the third verification parameter based on the TNGF key, the TNonce, and the identifier of the TNGF.

In a possible design solution, the notification request message further includes an identifier of the TNGF. The second verification parameter is generated by the TNGF based on an intermediate key, the TNonce, and the identifier of the TNGF. The intermediate key is generated by the communication apparatus 800 based on the TNGF key. The processing module 801 is specifically configured to generate the third verification parameter based on the intermediate key, the TNonce, and the identifier of the TNGF.

In a possible design solution, the notification request message further includes an address of the TNGF and an identifier of the TNGF. The second verification parameter is generated by the TNGF based on the TNGF key, the TNonce, the address of the TNGF, and the identifier of the TNGF. The processing module 801 is specifically configured to generate the third verification parameter based on the TNGF key, the TNonce, the address of the TNGF, and the identifier of the TNGF.

In a possible design solution, the notification request message further includes an address of the TNGF and an identifier of the TNGF. The second verification parameter is generated by the TNGF based on an intermediate key, the TNonce, the address of the TNGF, and the identifier of the TNGF. The intermediate key is generated by the communication apparatus 800 based on the TNGF key. The processing module 801 is specifically configured to generate the third verification parameter based on the intermediate key, the TNonce, the address of the TNGF, and the identifier of the TNGF.

In a possible design solution, the processing module 801 is further configured to generate a UE authentication identity based on the TNGF key and at least the TNonce and the UNonce.

Optionally, the transceiver module 802 may include a receiving module and a sending module (not shown in FIG. 8). The transceiver module 802 is configured to implement a sending function and a receiving function of the communication apparatus 800.

Optionally, the communication apparatus 800 may further include a storage module (not shown in FIG. 8). The storage module stores a program or instructions. When the processing module 801 executes the program or the instructions, the communication apparatus 800 can perform the function of the UE in the communication method shown in FIG. 7. It should be understood that the processing module 801 in the communication apparatus 800 may be implemented by a processor or a processor-related circuit component, and may be a processor or a processing unit. The transceiver module 802 may be implemented by a transceiver or a transceiver-related circuit component, and may be a transceiver or a transceiver unit.

It should be noted that the communication apparatus 800 may be a terminal device, or may be a chip (system) or another part or component that may be disposed in the terminal device, or may be an apparatus including the terminal device. This is not limited in this application.

In some other embodiments, the communication apparatus 800 may be used in the communication system shown in FIG. 5, and perform a function of the TNGF in the communication method shown in FIG. 7.

The transceiver module 802 is configured to: when the communication apparatus 800 receives an initial context setup request from an AMF, send a notification request message to a UE via a source TNAP. The notification request message includes a nonce TNonce of the communication apparatus 800 and a second verification parameter. The second verification parameter is generated based on the TNonce and a TNGF key. The TNGF key is a shared key between the UE and the communication apparatus 800. The processing module 801 is configured to generate a fifth verification parameter based on the TNGF key and a UNonce. The transceiver module 802 is further configured to receive a notification response message from the UE. The notification response message includes the nonce UNonce of the UE and a fourth verification parameter. The fourth verification parameter is generated based on the UNonce and a root key for the communication apparatus 800. The transceiver module 802 is further configured to: when the fourth verification parameter matches the fifth verification parameter, send a source key to the source TNAP. The source key is used to secure communication between the source TNAP and the UE.

In a possible design solution, the processing module 801 is specifically configured to generate an intermediate key based on the TNGF key. The communication apparatus 800 generates the fifth verification parameter based on the intermediate key and the UNonce.

In a possible design solution, the processing module 801 is further configured to generate a UE authentication identity based on the TNonce, the UNonce, and the TNGF key.

Optionally, the transceiver module 802 may include a receiving module and a sending module (not shown in FIG. 8). The transceiver module 802 is configured to implement a sending function and a receiving function of the communication apparatus 800.

Optionally, the communication apparatus 800 may further include a storage module (not shown in FIG. 8). The storage module stores a program or instructions. When the processing module 801 executes the program or the instructions, the communication apparatus 800 can perform the function of the TNGF in the communication method shown in FIG. 7.

It should be understood that the processing module 801 in the communication apparatus 800 may be implemented by a processor or a processor-related circuit component, and may be a processor or a processing unit. The transceiver module 802 may be implemented by a transceiver or a transceiver-related circuit component, and may be a transceiver or a transceiver unit.

It should be noted that, the communication apparatus 800 may be a network device, for example, a TNGF, or may be a chip (system) or another part or component that may be disposed in the network device, or may be an apparatus including the network device. This is not limited in this application.

For example, FIG. 9 is a diagram 2 of a structure of a communication apparatus according to an embodiment of this application. The communication apparatus may be a terminal device or a network device, or may be a chip (a system) or another part or component that may be disposed in the terminal device or the network device. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903. For example, the processor 901 may be connected to the memory 902 and the transceiver 903 through a communication bus.

The following describes each part of the communication apparatus 900 in detail with reference to FIG. 9.

The processor 901 is a control center of the communication apparatus 900, and may be one processor or may be a collective term of multiple processing elements. For example, the processor 901 is one or more central processing units (central processing units, CPUs), or may be an application-specific integrated circuit (application-specific integrated circuit, ASIC), or is configured as one or more integrated circuits for implementing embodiments of this application, for example, one or more digital signal processors (digital signal processors, DSPs) or one or more field programmable gate arrays (field programmable gate arrays, FPGAs).

Optionally, the processor 901 may perform various functions of the communication apparatus 900 by running or executing a software program stored in the memory 902 and invoking data stored in the memory 902.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include multiple processors, for example, the processor 901 and a processor 904 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store a software program for executing the solutions in this application, and the processor 901 controls the execution. For a specific implementation, refer to the foregoing method embodiments. Details are not described herein again.

Optionally, the memory 902 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. The memory 902 is not limited thereto. The memory 902 may be integrated with the processor 901, or may exist independently, and is coupled to the processor 901 through an interface circuit (not shown in FIG. 9) of the communication apparatus 900. This is not specifically limited in this embodiment of this application. The transceiver 903 is configured to communicate with another communication apparatus. For example, the communication apparatus 900 is a terminal device, and the transceiver 903 may be configured to communicate with a network device or communicate with another terminal device. For another example, the communication apparatus 900 is a network device, and the transceiver 903 may be configured to communicate with a terminal device or communicate with another network device.

Optionally, the transceiver 903 may include a receiver and a transmitter (not separately shown in FIG. 9). The receiver is configured to implement a receiving function, and the transmitter is configured to implement a sending function. Optionally, the transceiver 903 may be integrated with the processor 901, or may exist independently, and is coupled to the processor 901 through an interface circuit (not shown in FIG. 9) of the communication apparatus 900. This is not specifically limited in this embodiment of this application.

It should be noted that the structure of the communication apparatus 900 shown in FIG. 9 does not constitute a limitation on the communication apparatus. An actual communication apparatus may include more or fewer parts than those shown in the figure, or combine some parts, or have different part arrangement.

In addition, for technical effects of the communication apparatus 900, refer to the technical effects of the communication method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). All or some of the foregoing embodiments may be implemented by using software, hardware (for example, a circuit), firmware, or any combination thereof. When the software is used to implement the embodiments, all or some of the foregoing embodiments may be implemented in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of multiple items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division during actual implementation. For example, multiple units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
in a procedure in which a user equipment UE accesses a trusted non-3rd generation partnership project gateway function TNGF via a source trusted non-3rd generation partnership project access point TNAP, obtaining, by the UE, a UE authentication identity, and generating a TNGF key, wherein the TNGF key is a shared key between the TNGF and the UE; and
when the UE switches from the source TNAP to a target TNAP, sending, by the UE, a first message to the TNGF via the target TNAP, wherein the first message comprises the UE authentication identity and a first verification parameter, and the first verification parameter is generated by the UE based on the UE authentication identity and the TNGF key.

2. The method according to claim 1, wherein obtaining, by the UE, the UE authentication identity comprises:
receiving, by the UE, the UE authentication identity from the TNGF via the source TNAP.

3. The method according to claim 1 or 2, wherein before obtaining, by the UE, the UE authentication identity, the method further comprises:
accessing, by the UE, the TNGF via the source TNAP.

4. The method according to claim 3, wherein the first message is an identity response message, and before sending, by the UE, the first message to the TNGF via the target TNAP, the method further comprises:
determining, by the UE, to switch from the source TNAP to the target TNAP;
establishing, by the UE, a layer 2 connection to the target TNAP; and
receiving, by the UE, an identity request message from the target TNAP, wherein the identity request message is used to trigger the UE to send the first message.

5. The method according to claim 1, wherein the method further comprises:
receiving, by the UE, a notification request message from the TNGF via the source TNAP, wherein the notification request message comprises a nonce TNonce of the TNGF and a second verification parameter, and the second verification parameter is generated by the TNGF based on the TNGF key and the TNonce; and
generating, by the UE, a third verification parameter based on the TNGF key and the TNonce; and
obtaining, by the UE, the UE authentication identity comprises:
when the second verification parameter matches the third verification parameter, generating, by the UE, the UE authentication identity based on the TNGF key, the TNonce, and a nonce UNonce of the UE, wherein the UNonce is generated by the UE.

6. The method according to claim 5, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the TNGF key and the UNonce.

7. The method according to claim 1, wherein the method further comprises:
receiving, by the UE, a notification request message from the TNGF via the source TNAP, wherein the notification request message comprises a nonce TNonce of the TNGF and a second verification parameter, the second verification parameter is generated by the TNGF based on an intermediate key and the TNonce, and the intermediate key is generated by the TNGF based on the TNGF key;
generating, by the UE, the intermediate key based on the TNGF key; and
generating, by the UE, a third verification parameter based on the intermediate key and the TNonce; and
obtaining, by the UE, the UE authentication identity comprises:
when the second verification parameter matches the third verification parameter, generating, by the UE, the UE authentication identity based on the intermediate key, the TNonce, and a nonce UNonce of the UE, wherein the UNonce is generated by the UE.

8. The method according to claim 7, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the intermediate key and the UNonce.

9. The method according to claim 1, wherein the method further comprises:
receiving, by the UE, a notification request message from the TNGF via the source TNAP, wherein the notification request message comprises a nonce TNonce of the TNGF, an address of the TNGF, and a second verification parameter, and the second verification parameter is generated by the TNGF based on the TNGF key, the TNonce, and the address of the TNGF; and
generating, by the UE, a third verification parameter based on the TNGF key, the TNonce, and the address of the TNGF; and
obtaining, by the UE, the UE authentication identity comprises:
when the second verification parameter matches the third verification parameter, generating, by the UE, the UE authentication identity based on the TNGF key and at least the TNonce and a nonce UNonce of the UE.

10. The method according to claim 9, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the TNGF key and the UNonce.

11. The method according to claim 1, wherein the method further comprises:
receiving, by the UE, a notification request message from the TNGF via the source TNAP, wherein the notification request message comprises a nonce TNonce of the TNGF, an address of the TNGF, and a second verification parameter, the second verification parameter is generated by the TNGF based on an intermediate key, the nonce TNonce of the TNGF, and the address of the TNGF, and the intermediate key is generated by the TNGF based on the TNGF key;
generating, by the UE, the intermediate key based on the TNGF key; and
generating, by the UE, a third verification parameter based on the intermediate key, the TNonce, and the address of the TNGF; and
obtaining, by the UE, the UE authentication identity comprises:
when the second verification parameter matches the third verification parameter, generating, by the UE, the UE authentication identity based on the intermediate key and at least the TNonce and a nonce UNonce of the UE, wherein the UNonce is generated by the UE.

12. The method according to claim 11, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the intermediate key and the UNonce.

13. The method according to claim 1, wherein the method further comprises:
receiving, by the UE, a notification request message from the TNGF via the source TNAP, wherein the notification request message comprises a nonce TNonce of the TNGF, an identifier of the TNGF, and a second verification parameter, and the second verification parameter is generated by the TNGF based on the TNGF key, the TNonce, and the identifier of the TNGF; and
generating, by the UE, a third verification parameter based on the TNGF key, the TNonce, and the identifier of the TNGF; and
obtaining, by the UE, the UE authentication identity comprises:
when the second verification parameter matches the third verification parameter, generating, by the UE, the UE authentication identity based on the TNGF key and at least the TNonce and a nonce UNonce of the UE, wherein the UNonce is generated by the UE.

14. The method according to claim 13, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the TNGF key and the UNonce.

15. The method according to claim 1, wherein the method further comprises:
receiving, by the UE, a notification request message from the TNGF via the source TNAP, wherein the notification request message comprises a nonce TNonce of the TNGF, an identifier of the TNGF, and a second verification parameter, the second verification parameter is generated by the TNGF based on an intermediate key, the TNonce, and the identifier of the TNGF, and the intermediate key is generated by the TNGF based on the TNGF key;
generating, by the UE, the intermediate key based on the TNGF key; and
generating, by the UE, a third verification parameter based on the intermediate key, the TNonce, and the identifier of the TNGF; and
obtaining, by the UE, the UE authentication identity comprises:
when the second verification parameter matches the third verification parameter, generating, by the UE, the UE authentication identity based on the intermediate key and at least the TNonce and a nonce UNonce of the UE, wherein the UNonce is generated by the UE.

16. The method according to claim 15, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the intermediate key and the UNonce.

17. The method according to claim 1, wherein the method further comprises:
receiving, by the UE, a notification request message from the TNGF via the source TNAP, wherein the notification request message comprises a nonce TNonce of the TNGF, an address of the TNGF, an identifier of the TNGF, and a second verification parameter, and the second verification parameter is generated by the TNGF based on the TNGF key, the TNonce, the address of the TNGF, and the identifier of the TNGF; and
generating, by the UE, a third verification parameter based on the TNGF key, the TNonce, the address of the TNGF, and the identifier of the TNGF; and
obtaining, by the UE, the UE authentication identity comprises:
when the second verification parameter matches the third verification parameter, generating, by the UE, the UE authentication identity based on the TNGF key and at least the TNonce and a nonce UNonce of the UE, wherein the UNonce is generated by the UE.

18. The method according to claim 17, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the TNGF key and the UNonce.

19. The method according to claim 1, wherein the method further comprises:
receiving, by the UE, a notification request message from the TNGF via the source TNAP, wherein the notification request message comprises a TNonce, an address of the TNGF, an identifier of the TNGF, and a second verification parameter, the second verification parameter is generated by the TNGF based on an intermediate key, the TNonce, the address of the TNGF, and the identifier of the TNGF, and the intermediate key is generated by the TNGF based on the TNGF key;
generating, by the UE, the intermediate key based on the TNGF key; and
generating, by the UE, a third verification parameter based on the intermediate key, the TNonce, the address of the TNGF, and the identifier of the TNGF; and
obtaining, by the UE, the UE authentication identity comprises:
when the second verification parameter matches the third verification parameter, generating, by the UE, the UE authentication identity based on the intermediate key and at least the TNonce and a nonce UNonce of the UE, wherein the UNonce is generated by the UE.

20. The method according to claim 19, wherein the method further comprises:
when the second verification parameter matches the third verification parameter, sending, by the UE, a notification response message to the TNGF via the source TNAP, wherein the notification response message comprises a fourth verification parameter and the UNonce, and the fourth verification parameter is generated based on the intermediate key and the UNonce.

21. The method according to any one of claims 5 to 20, wherein before obtaining, by the UE, the UE authentication identity, the method further comprises:
generating, by the UE, the UNonce.

22. The method according to any one of claims 1 to 21, wherein before sending, by the UE, the first message to the TNGF via the target TNAP, the method further comprises:
generating, by the UE, the first verification parameter based on the TNGF key and the UE authentication identity.

23. The method according to claim 22, wherein generating, by the UE, the first verification parameter based on the TNGF key and the UE authentication identity comprises:
calculating, by the UE, a first message authentication code based on the TNGF key, the UE authentication identity, and a preconfigured function, to obtain the first verification parameter.

24. The method according to claim 22, wherein generating, by the UE, the first verification parameter based on the TNGF key and the UE authentication identity comprises:
generating, by the UE, the intermediate key based on the TNGF key; and
calculating, by the UE, a first message authentication code based on the intermediate key, the UE authentication identity, and a preconfigured function, to obtain the first verification parameter.

25. The method according to any one of claims 1 to 24, wherein the TNGF key is generated based on a long-term key.

26. A communication method, wherein the method comprises:
in a procedure in which a user equipment UE accesses a trusted non-3rd generation partnership project gateway function TNGF via a source trusted non-3rd generation partnership project access point TNAP, obtaining, by the UE, a UE authentication identity, and generating a TNGF key, wherein the TNGF key is a shared key between the TNGF and the UE; and
when the UE switches from the source TNAP to a target TNAP, sending, by the UE, the UE authentication identity and a first verification parameter to the target TNAP, wherein
the first verification parameter is generated based on an intermediate key, and the intermediate key is generated based on the TNGF key and a first type distinguisher.

27. The method according to claim 26, wherein the first type distinguisher is 0x03.

28. A communication method, wherein the method comprises:
in a procedure in which a user equipment UE accesses a trusted non-3rd generation partnership project gateway function TNGF via a source trusted non-3rd generation partnership project 3GPP access point TNAP, obtaining, by the TNGF, a UE authentication identity, and obtaining a TNGF key, wherein the TNGF key is a shared key between the TNGF and the UE;
receiving, by the TNGF, a first message from the UE via a target TNAP, wherein the first message comprises the UE authentication identity and a first verification parameter, and the first verification parameter is generated by the TNGF based on the UE authentication identity and the TNGF key; and
when the first verification parameter is successfully checked, generating, by the TNGF, a target key based on the TNGF key, wherein the target key is used to secure communication between the UE and the target TNAP.

29. The method according to claim 28, wherein obtaining, by the TNGF, the UE authentication identity comprises:
generating, by the TNGF, the UE authentication identity.

30. The method according to claim 28, wherein the method further comprises:
sending, by the TNGF, a notification request message to the UE via the source TNAP, wherein the notification request message comprises a nonce TNonce of the TNGF and a second verification parameter, and the second verification parameter is generated by the TNGF based on the TNGF key and the TNonce;
receiving, by the TNGF, a notification response message from the UE via the source TNAP, wherein the notification response message comprises a fourth verification parameter and a nonce UNonce of the UE, and the fourth verification parameter is generated by the UE based on the TNGF key and the UNonce; and
generating, by the TNGF, a fifth verification parameter based on the TNGF key and the UNonce; and
obtaining, by the TNGF, the UE authentication identity comprises:
when the fourth verification parameter matches the fifth verification parameter, generating, by the TNGF, the UE authentication identity based on the TNGF key, the TNonce, and the UNonce.

31. The method according to claim 28, wherein the method further comprises:
generating, by the TNGF, an intermediate key based on the TNGF key;
sending, by the TNGF, a notification request message to the UE via the source TNAP, wherein the notification request message comprises a nonce TNonce of the TNGF and a second verification parameter, and the second verification parameter is generated by the TNGF based on the intermediate key and the TNonce;
receiving, by the TNGF, a notification response message from the UE via the source TNAP, wherein the notification response message comprises a fourth verification parameter and a nonce UNonce of the UE, and the fourth verification parameter is generated by the UE based on the intermediate key and the UNonce; and
generating, by the TNGF, a fifth verification parameter based on the intermediate key and the UNonce; and
obtaining, by the TNGF, the UE authentication identity comprises:
when the fourth verification parameter matches the fifth verification parameter, generating, by the TNGF, the UE authentication identity based on the intermediate key, the TNonce, and the UNonce.

32. The method according to claim 28, wherein the method further comprises:
sending, by the TNGF, a notification request message to the UE via the source TNAP, wherein the notification request message comprises a nonce TNonce of the TNGF, an address of the TNGF, and a second verification parameter, and the second verification parameter is generated by the TNGF based on the TNGF key, the TNonce, and the address of the TNGF;
receiving, by the TNGF, a notification response message from the UE via the source TNAP, wherein the notification response message comprises a fourth verification parameter and a nonce UNonce of the UE, and the fourth verification parameter is generated by the UE based on the TNGF key and the UNonce; and
generating, by the TNGF, a fifth verification parameter based on the TNGF key and the UNonce; and
obtaining, by the TNGF, the UE authentication identity comprises:
when the fourth verification parameter matches the fifth verification parameter, generating, by the TNGF, the UE authentication identity based on the TNGF key and at least the TNonce and the UNonce.

33. The method according to claim 28, wherein the method further comprises:
generating, by the TNGF, an intermediate key based on the TNGF key;
sending, by the TNGF, a notification request message to the UE via the source TNAP, wherein the notification request message comprises a nonce TNonce of the TNGF, an address of the TNGF, and a second verification parameter, and the second verification parameter is generated by the TNGF based on the intermediate key, the TNonce, and the address of the TNGF;
receiving, by the TNGF, a notification response message from the UE via the source TNAP, wherein the notification response message comprises a fourth verification parameter and a nonce UNonce of the UE, and the fourth verification parameter is generated by the UE based on the intermediate key and the UNonce; and
generating, by the TNGF, a fifth verification parameter based on the intermediate key and the UNonce; and
obtaining, by the TNGF, the UE authentication identity comprises:
when the fourth verification parameter matches the fifth verification parameter, generating, by the TNGF, the UE authentication identity based on the intermediate key and at least the TNonce and the UNonce.

34. The method according to claim 28, wherein the method further comprises:
sending, by the TNGF, a notification request message to the UE via the source TNAP, wherein the notification request message comprises a nonce TNonce of the TNGF, an identifier of the TNGF, and a second verification parameter, and the second verification parameter is generated by the TNGF based on the TNGF key, the TNonce, and the identifier of the TNGF;
receiving, by the TNGF, a notification response message from the UE via the source TNAP, wherein the notification response message comprises a fourth verification parameter and a nonce UNonce of the UE, and the fourth verification parameter is generated by the UE based on the TNGF key and the UNonce; and
generating, by the TNGF, a fifth verification parameter based on the TNGF key and the UNonce; and
obtaining, by the TNGF, the UE authentication identity comprises:
when the fourth verification parameter matches the fifth verification parameter, generating, by the TNGF, the UE authentication identity based on the TNGF key and at least the TNonce and the UNonce.

35. The method according to claim 28, wherein the method further comprises:
generating, by the TNGF, an intermediate key based on the TNGF key;
sending, by the TNGF, a notification request message to the UE via the source TNAP, wherein the notification request message comprises a nonce TNonce of the TNGF, an identifier of the TNGF, and a second verification parameter, and the second verification parameter is generated by the TNGF based on the intermediate key, the TNonce, and the identifier of the TNGF;
receiving, by the TNGF, a notification response message from the UE via the source TNAP, wherein the notification response message comprises a fourth verification parameter and a nonce UNonce of the UE, and the fourth verification parameter is generated by the UE based on the intermediate key and the UNonce; and
generating, by the TNGF, a fifth verification parameter based on the intermediate key and the UNonce; and
obtaining, by the TNGF, the UE authentication identity comprises:
when the fourth verification parameter matches the fifth verification parameter, generating, by the TNGF, the UE authentication identity based on the intermediate key and at least the TNonce and the UNonce.

36. The method according to claim 28, wherein the method further comprises:
sending, by the TNGF, a notification request message to the UE via the source TNAP, wherein the notification request message comprises a nonce TNonce of the TNGF, an address of the TNGF, an identifier of the TNGF, and a second verification parameter, and the second verification parameter is generated by the TNGF based on the TNGF key, the TNonce, the address of the TNGF, and the identifier of the TNGF;
receiving, by the TNGF, a notification response message from the UE via the source TNAP, wherein the notification response message comprises a fourth verification parameter and a nonce UNonce of the UE, and the fourth verification parameter is generated by the UE based on the TNGF key and the UNonce; and
generating, by the TNGF, a fifth verification parameter based on the TNGF key and the UNonce; and
obtaining, by the TNGF, the UE authentication identity comprises:
when the fourth verification parameter matches the fifth verification parameter, generating, by the TNGF, the UE authentication identity based on the TNGF key and at least the TNonce and the UNonce.

37. The method according to claim 28, wherein the method further comprises:
generating, by the TNGF, an intermediate key based on the TNGF key;
sending, by the TNGF, a notification request message to the UE via the source TNAP, wherein the notification request message comprises a nonce TNonce of the TNGF, an address of the TNGF, an identifier of the TNGF, and a second verification parameter, and the second verification parameter is generated by the TNGF based on the intermediate key, the TNonce, the address of the TNGF, and the identifier of the TNGF;
receiving, by the TNGF, a notification response message from the UE via the source TNAP, wherein the notification response message comprises a fourth verification parameter and a nonce UNonce of the UE, and the fourth verification parameter is generated by the UE based on the intermediate key and the UNonce; and
generating, by the TNGF, a fifth verification parameter based on the intermediate key and the UNonce; and
obtaining, by the TNGF, the UE authentication identity comprises:
when the fourth verification parameter matches the fifth verification parameter, generating, by the TNGF, the UE authentication identity based on the intermediate key and at least the TNonce and the UNonce.

38. The method according to any one of claims 28 to 37, wherein before generating, by the TNGF, the target key based on the TNGF key, the method further comprises:
generating, by the TNGF, a sixth verification parameter based on the UE authentication identity and the TNGF key; and
generating, by the TNGF, the target key based on the TNGF key comprises:
when the first verification parameter matches the sixth verification parameter, generating, by the TNGF, the target key based on the TNGF key.

39. The method according to any one of claims 28 to 38, wherein the TNGF key is generated based on a long-term key.

40. A communication apparatus, wherein the communication apparatus is configured to perform the communication method according to any one of claims 1 to 27.

41. A communication apparatus, wherein the communication apparatus is configured to perform the communication method according to any one of claims 28 to 39.

42. A communication apparatus, wherein the communication apparatus comprises a processor, and
the processor is configured to perform the communication method according to any one of claims 1 to 39.

43. A communication apparatus, comprising a processor and a memory, wherein the memory is configured to store computer instructions, and when the processor executes the instructions, the communication apparatus is enabled to perform the communication method according to any one of claims 1 to 39.

44. A communication apparatus, wherein the communication apparatus comprises a processor and a transceiver, the transceiver is configured to exchange information between the communication apparatus and another communication apparatus, and the processor executes program instructions to perform the communication method according to any one of claims 1 to 39.

45. A processor, wherein the processor is configured to perform the communication method according to any one of claims 1 to 39.

46. A computer-readable storage medium, wherein the computer-readable storage medium comprises a computer program or instructions, and when the computer program or the instructions are run on a computer, the computer is enabled to perform the communication method according to any one of claims 1 to 39.

47. A computer program product, wherein the computer program product comprises a computer program or instructions, and when the computer program or the instructions are run on a computer, the computer is enabled to perform the communication method according to any one of claims 1 to 39.
